(19) Europäisches Patentamt
European Patent Office
Office européen des brevets

(11) **EP 2 641 125 B1**

(12) **EUROPÄISCHE PATENTSCHRIFT**

(45) Veröffentlichungstag und Bekanntmachung des Hinweises auf die Patenterteilung:
**19.06.2019 Patentblatt 2019/25**

(21) Anmeldenummer: **11791207.1**

(22) Anmeldetag: **16.11.2011**

(51) Int Cl.:
***G02C 7/02*** (2006.01)

(86) Internationale Anmeldenummer:
**PCT/EP2011/005780**

(87) Internationale Veröffentlichungsnummer:
**WO 2012/065736 (24.05.2012 Gazette 2012/21)**

(54) **BRILLENGLAS MIT ASYMMETRISCHEM DIFFRAKTIVEN GITTER ZUR FARBSAUMKORREKTUR**

SPECTACLE LENS WITH ASYMMETRIC DIFFRACTION GRATING FOR COLOUR FRINGE CORRECTION

VERRE DE LUNETTE PRÉSENTANT UN RÉSEAU DE DIFFRACTION ASYMÉTRIQUE POUR UNE CORRECTION DE FRANGE COLORÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.11.2010 DE 102010051645**

(43) Veröffentlichungstag der Anmeldung:
**25.09.2013 Patentblatt 2013/39**

(73) Patentinhaber: **Rodenstock GmbH**
**80687 München (DE)**

(72) Erfinder:
• **BECKEN, Wolfgang**
**82061 Neuried (DE)**
• **ESSER, Gregor**
**80686 München (DE)**
• **ALTHEIMER, Helmut**
**87650 Baisweil-Lauchdorf (DE)**
• **SEIDEMANN, Anne**
**81375 München (DE)**
• **TRUMM, Stephan**
**80999 München (DE)**
• **WEHNER, Edda**
**82275 Emmering (DE)**
• **SESSNER, Rainer**
**91154 Roth (DE)**
• **UTTENWEILER, Dietmar**
**82057 Icking (DE)**

(74) Vertreter: **Müller-Boré & Partner**
**Patentanwälte PartG mbB**
**Friedenheimer Brücke 21**
**80639 München (DE)**

(56) Entgegenhaltungen:
**EP-A2- 1 072 906          US-A- 6 070 980**
**US-A1- 2008 278 681      US-A1- 2009 195 748**

**Beschreibung**

Ein optisches Element, wie z.B. ein Brillenglas, das kein Planglas ist, hat außer in der optischen Mitte neben der dioptrischen Wirkung auch immer eine prismatische Wirkung. Ist das Glas aus einem einheitlichen Material gefertigt, dann ist je nach Material und dessen Abbezahl mit dieser prismatischen Wirkung immer auch ein mehr oder weniger starker Farbsaum, also ein Farbquerfehler, verbunden. Dieser ist umso stärker, je größer die Wirkung des Glases ist, je weiter der Beobachtungspunkt von der optischen Mitte entfernt ist und je kleiner die Abbezahl ist. Ein spürbarer Farbsaum tritt insbesondere bei höherbrechenden optischen Materialien auf, welche zur Reduktion der Dicke der Brillengläser häufig verwendet werden. Da dieser Farbsaum die Abbildungsqualität beeinträchtigt, besteht Interesse daran, diesen zu korrigieren. Es ist z.B. aus DE 41 10 614 A1, DE 102 34 216 oder US 6 070 980 bekannt, eine Korrektur des Farbsaums mit einem diffraktiven Gitter und insbesondere mit einem rotationssymmetrischen Gitter zu erzielen. Es hat sich jedoch herausgestellt, dass die mit Hilfe von rotationssymmetrischen Gittern erzielte Farbsaumkorrektur, insbesondere bei nicht rotationssymmetrischen optischen Elementen, nicht zufrieden stellend ist.

Es ist eine Aufgabe der Erfindung ein effizientes, kostengünstiges und schnelles Verfahren zum Herstellen von farbsaumkorrigierten optischen Elementen, wie z.B. Brillengläsern, sowie entsprechende Vorrichtungen bereitzustellen. Insbesondere ist eine Aufgabe der Erfindung auch bei nicht rotationssymmetrischen optischen Elementen, wie z.B. bei progressiven und atorischen Brillengläsern, eine verbesserte Farbsaumkorrektur zu erzielen.

Diese Aufgabe wird durch ein Verfahren zum Bestimmen eines diffraktiven Gitters, ein Computerprogrammerzeugnis, ein Speichermedium, ein Verfahren zum Herstellen eines Brillenglases und eine Vorrichtung zum Herstellen eines Brillenglases mit den in den unabhängigen Ansprüchen angegebenen Merkmalen gelöst. Bevorzugte Ausführungsformen sind Gegenstand der abhängigen Ansprüche.

Gemäß einem Aspekt der Erfindung wird ein computerimplementiertes Verfahren zum Bestimmen eines diffraktiven Gitters zur Farbsaumkompensation eines nicht rotationssymmetrischen, refraktiven, optischen Elements vorgeschlagen. Das refraktive, optische Element ist ein Brillenglas. Das Verfahren umfasst die Schritte:

Erfassen von Daten des refraktiven optischen Elements, und
Berechnen des diffraktiven Gitters anhand der erfassten Daten des refraktiven optischen Elements derart, dass die Gitterlinien des diffraktiven Gitters die Linien konstanter Dicke des refraktiven optischen Elements folgen.

Das Berechnen des diffraktiven Gitters umfasst insbesondere Ermitteln der Dicke des refraktiven optischen Elements aus den erfassten Daten des refraktiven optischen Elements und Berechnen des Verlaufs der Gitterlinien des diffraktiven Gitters, derart, dass diese die Linien konstanter Dicke des refraktiven optischen Elements folgen.

Der Farbsaum von optischen Elementen (z.B. von Brillengläsern) entsteht insbesondere durch den Farbquerfehler und beruht darauf, dass die beiden kombinierten refraktiven Grenzflächen des optischen Elements eine wellenlängenabhängige prismatische Wirkung $Pr_{ref}$ besitzen. Mittels eines diffraktiven Gitters, welches auf zumindest einer der refraktiven Grenzflächen des optischen Elements aufgebracht wird, ist es möglich, eine Farbsaumkorrektur zu erzielen. Wie eingangs ausgeführt, ist aus dem Stand der Technik bekannt, den aufgrund der prismatischen Wirkung eines refraktiven optischen Elements entstehenden Farbsaum durch rotationsymmetrische diffraktive Gitter zu kompensieren oder zu reduzieren.

Die vorliegende Erfindung basiert auf der Erkenntnis, dass mit Hilfe von rotationssymmetrischen Gittern eine zufriedenstellende Farbsaumkorrektur lediglich bei rotationssymmetrischen Brillengläsern erzielt werden kann, da nur in diesem Fall die lokale Achslage des farbsaumverursachenden Prismas (bzw. die Basislage) senkrecht zu kreisförmigen Kurven der Gitter steht. Es ist ferner erkannt worden, dass bei nicht rotationssymmetrischen optischen Elementen, wie z.B. bei atorischen und insbesondere bei progressiven Brillengläsern, die Kurven, die senkrecht zu den Prismenachslagen bzw. Basislagen des Prismas stehen, nicht rotationssymmetrisch sind. Gemäß einem Aspekt der Erfindung wird daher vorgeschlagen, bei nicht rotationssymmetrischen optischen Elementen, asymmetrische diffraktive Gitter zu verwenden, um eine verbesserte Farbsaumkorrektur zu erzielen.

Wie nachfolgend gezeigt wird, kann bei geeigneter Auslegung oder Dimensionierung des diffraktiven Gitters, insbesondere der Periode *d* des diffraktiven Gitters, im Idealfall eine nahezu vollständige Korrektur des Farbsaums eines refraktiven optischen Elements für eine gegebene sphärozylindrische Wirkungsverteilung, für einen gegebenen Objektabstand und für eine gegebene Gebrauchssituation erzielt werden. Anders ausgedrückt kann der Farbsaum eines refraktiven optischen Elements durch ein Gitter kompensiert werden, welches individuell für das Brillenglas (insbesondere die vorgegebene sphärozylindrische Wirkung), für den vorgegebenen Objektanstand und für die vorgegebene Gebrauchssituation berechnet ist. Dies kann z.B. mittels einer simultanen, iterativen Optimierung des diffraktiven Gitters und zumindest einer der refraktiven Flächen des optischen Elements durch ein Minimieren/Maximieren einer Zielfunktion erfolgen. Vorzugweise kann dabei eine vorgegebene Gebrauchsstellung des optischen Elements berücksichtigt werden. Ein solches Optimierungsverfahren kann zwar zu einer optimalen Kompensation des Farbsaums eines refraktiven optischen Elements führen, ist jedoch vergleichsweise zeitaufwendig und benötigt erhebliche Rechenleistung.

Gemäß einem Aspekt der Erfindung wird daher ein Verfahren vorgeschlagen, welches es ermöglicht, schnell und effizient ein diffraktives Gitter zur zumindest teilweisen Farbsaumkompensation oder Korrektur eines beliebigen, auch nicht rotationssymmetrischen, refraktiven optischen Elements zu bestimmen. Das Verfahren basiert insbesondere auf der überaschenden Erkenntnis, dass die Gitterlinien eines diffraktiven Gitters, welches geeignet ist, den Farbsaum eines beliebigen refraktiven, optischen Elements zumindest teilweise zu reduzieren oder zu kompensieren, den Linien konstanter Dicke des refraktiven optischen Elements folgen.

Gemäß einem Aspekt der Erfindung werden daher zunächst die Daten des refraktiven optischen Elements, dessen Farbsaum korrigiert werden soll, vorgegeben oder erfasst. Die Daten des refraktiven optischen Elements können Flächendaten der Grenzflächen des refraktiven optischen Elements sowie Daten bezüglich des Brechungsindexes des optischen Materials des refraktiven optischen Elements umfassen. Alternativ können die Daten des refraktiven optischen Elements andere Daten sein, anhand deren die Dicke und gegebenenfalls ferner der Betrag und/oder die Basislage des (lokalen) Prismas des refraktiven optischen Elements berechnet werden kann. Die Daten des refraktiven optischen Elements können theoretische Daten sein oder auf Messdaten des refraktiven optischen Elements basieren.

Anhand der vorgegebenen/erfassten Daten des refraktiven optischen Elements kann die Dicke des refraktiven optischen Elements und gegebenenfalls der Betrag des Prismas des refraktiven optischen Elements oder die lokale Basislage des Prismas des refraktiven optischen Elements ermittelt werden. Anhand dessen kann ein diffraktives Gitter berechnet werden, dessen Gitterlinien die Linien konstanter Dicke des refraktiven optischen Elements folgen. Anders ausgedrückt, wird ein diffraktives Gitter berechnet, dessen Gitterlinien näherungsweise parallel zu den Isolinien der Brillenglasdicke verlaufen.

Das Verfahren kann ferner ein Bereitstellen von Fertigungs- bzw. Bearbeitungsdaten des berechneten diffraktiven Gitters umfassen. Die Fertigungs- bzw. Bearbeitungsdaten können Daten bezüglich des Verlaufs und der Periode der Gitterlinien, des Winkels, des Profils des Gitters, etc. umfassen. Die bereitgestellten Daten des berechneten diffraktiven Gitters können zur weiteren Verwendung in geeigneten Speichermitteln gespeichert werden.

Mit dem erfindungsgemäßen Verfahren ist es möglich, schnell und in einer einfachen und effizienten Art und Weise ein diffraktives Gitter für ein beliebiges refraktives optisches Element zu bestimmen, welches geeignet ist, den Farbsaum des refraktiven optischen Elements zumindest teilweise zu kompensieren bzw. zu reduzieren. Insbesondere ist es möglich, einfach und schnell nichtrotationssymmetrische diffraktive Gitter zur Farbsaumkorrektur bzw. Kompensation von nicht rotationssymmetrischen optischen Elementen zu berechnen. Somit eignet sich das Verfahren insbesondere zum Bestimmen von diffraktiven Gittern zur Farbsaumkompensation von nicht rotationssymmetrischen Brillengläsern, insbesondere von progressiven und atorischen Brillengläsern, bei denen rotations-symmetrische Gitter den Farbsaum nur ungenügend kompensieren können. Insbesondere ist es möglich, den Farbsaum auch bei nicht-rotationssymmetrischen Brillengläsern innerhalb eines vorgegebenen zentralen Bereichs des Brillenglases (z.B. innerhalb eines Bereichs mit einem Radius von 20 mm oder größer) unter einer vorgegebenen Wahrnehmungsschwelle zu reduzieren. Die Wahrnehmungsschwelle kann variieren, vorzugsweise ist die Wahrnehmungsschwelle 0,5 cm/m, vorzugsweise kleiner oder gleich 0,4 cm/m, und besonders bevorzugt kleiner oder gleich 0,12 cm/m. Des Weiteren ist es möglich, zusätzlich eine Reduktion der Dicke des optischen Elements zu erzielen.

Unter einem optischen Element im Sinne der vorliegenden Anmeldung wird ein beliebiges abbildendes optisches Element oder System mit einer oder mehreren optischen Komponenten verstanden. Das optische Element kann z.B. eine Linse oder ein Linsensystem, ein Brillenglas, ein Prisma, etc. sein. Im Allgemeinen weist ein optisches Element zumindest zwei Grenzflächen auf. Ferner kann das optische Element zumindest ein diffraktives Gitter aufweisen, welches z.B. auf eine der Grenzflächen aufgebracht oder angeordnet ist. Das optische Element kann jedoch mehr als zwei Grenzflächen umfassen, wie z.B. bei einem Linsensystem, bei laminierten Linsen oder Brillengläsern, bei Brillengläsern, welche als ein so genanntes "Compoundsystem" mit zumindest einem Grundglas und einem Deckglas ausgebildet sind, der Fall ist.

Ein refraktives optisches Element im Sinne der vorliegenden Anmeldung ist ein optisches Element, welches keine diffraktiven Gitter aufweist.

Unter dem Begriff "diffraktives Gitter" wird im Sinne der vorliegenden Anmeldung jedes phasen- und/oder amplitudenmodulierende oder -ändernde optische Element verstanden, bei welchem Beugungseffekte von Relevanz sind. Insbesondere ist ein phasenänderndes optisches Element (POE) ein Element, welches phasenverzögernd oder phasenmodulierend ist, und zwar so, dass die Änderung der optischen Weglänge durch Hinzufügen des Elements vom Durchtrittspunkt des Strahls abhängt. Das diffraktive Gitter kann durch ein diffraktives optisches Element (Diffractive Optical Element oder DOE) realisiert werden oder durch jede andere Art der Phasen- und/oder Amplitudenmodulation.

Das diffraktive Gitter umfasst in der Regel eine im Wesentlichen regelmäßige, vorzugsweise periodische oder quasi-periodische, linienartige Anordnung von Strukturen oder Bereichen, in denen das Licht so beeinflusst wird, dass Beugungseffekte von Relevanz sind. Das diffraktive Gitter kann sowohl ein fein strukturiertes diffraktives Gitter sein, als auch ein grober strukturiertes diffraktives Gitter (wie z.B. ein MOD=Multi-Order-Diffraction Gitter) sein. Das diffraktive Gitter kann zum Beispiel ein Transmissionsgitter, ein mechanisch geteiltes Gitter, insbesondere ein Sägezahn- oder Blazegitter, ein holographisches Gitter, ein Gitter, welches durch eine dünne Folie oder Schicht mit variierendem Brechungsindex (Gradient-Index-Material) realisiert wird, etc. sein. Die Strukturen der eingesetzten diffraktiven Gitter können statisch oder schaltbar, insbesondere elektrisch schaltbar, sein. Verfahren zum Herstellen von statischen oder schaltbaren diffraktiven Gittern sind aus dem Stand der Technik bekannt.

Vorzugsweise werden diffraktive Gitter eingesetzt, bei welchen der Gangunterschied zwischen zwei benachbarten Gitterlinien typischerweise einer Beugungsordnung von $|m| = 1$ bis $|m| = 4$ entspricht. Ebenfalls ist es möglich, ein MOD-Gitter zu verwenden, bei welchem der Gangunterschied typischerweise in der Größenordnung $|m| \approx 20$ liegt. Das diffraktive Gitter kann beispielsweise in der ersten Beugungsordnung verwendet werden. Es ist jedoch möglich, das diffraktive Gitter nicht in erster Beugungsordnung, sondern in einer höheren Ordnung zu verwenden. Das diffraktive Gitter kann eine Grenzfläche aufweisen, welche gegen Luft berechnet wird. Es ist ebenfalls möglich, eine Grenzfläche des diffraktiven Gitters nicht gegen Luft, sondern gegen ein anderes Material zu berechnen.

Das Profil des diffraktiven Gitters kann geeignet dimensioniert oder festgelegt werden. Das Profil des Gitters wird vorzugsweise so festgelegt, dass die Beugungseffizienz für eine bestimmte Beugungsordnung maximal ist. Anders ausgedrückt, kann das Profil des Gitters so festgelegt werden, dass sich die Intensität des gebeugten Lichts möglichst in eine Beugungsordnung konzentriert. Vorzugsweise ist das Gitterprofil sägezahnförmig. Insbesondere kann eine sägezahnförmige (engl. blazed) Grenzfläche zwischen einem dispergierenden Grundmaterial und Luft eingesetzt werden. Die laterale Skala des Gitters, d.h. die Gitterkonstante kann in der Größenordnung der Wellenlänge liegen. Es ist jedoch auch möglich, diffraktive Gitter einzusetzen, wobei die Gitterkonstante nicht in der Größenordnung der Wellenlänge liegt, sondern um bis zu einem Faktor 100 darüber. Das diffraktive Gitter kann mit einem anderen Gitter überlagert/kombiniert werden, z.B. mit einem Fresnel-Gitter, welches eine von Null unterschiedliche dioptrische Wirkung aufweist. Die Periode des Gittes kann - wie nachfolgend in Detail beschrieben wird - geeignet bestimmt werden.

Das Gitter kann sich im Wesentlichen über den gesamten Winkelbereich des refraktiven optischen Elements, z.B. über den gesamten Blickwinkelbereich eines Brillenglases erstrecken.

Im allgemeinen Fall eines nicht rotationssymmetrischen refraktiven optischen Elements sind die Gitterlinien des berechneten diffraktiven Gitters, welche den Linien konstanter Dicke des refraktiven optischen Elements oder den Linien des konstanten Betrags des Prismas des refraktiven optischen Elements folgen, oder senkrecht zu der lokalen Basislage des Prismas des refraktiven optischen Elements stehen, asymmetrische, geschlossene Kurven. Bei rotationssymmetrischen Elementen können die Gitterlinien kreisförmige oder elliptische Kurven sein.

Vorzugsweise folgen die Gitterlinien des diffraktiven Gitters den Linien konstanter Dicke des refraktiven optischen Elements. Dabei kann die Dicke des refraktiven optischen Elements die Dicke sein, welche entlang einer (vorgegebenen) z-Richtung gemessen wird. Die z-Richtung kann die Richtung sein, welche senkrecht zu der Tangentialebene einer vorgegebenen Grenzfläche des refraktiven optischen Elements in einem vorgegebenen Bezugspunkt ist. Bei einem Brillenglas kann die z-Richtung die Richtung senkrecht zu der Tangentialebene der Vorder- oder der Rückfläche des Brillenglases in einem vorgegebenen Bezugspunkt, wie z.B. im Scheitel, in der geometrischen oder optischen Mitte, im Prismenbezugspunkt, im Zentrier- oder Anpaßpunkt, etc., des Brillenglases sein.

Erfindungsgemäß wird die Dicke des refraktiven optischen Elements entlang der schiefen Dicke in einer (vorgegebenen) Gebrauchsstellung des refraktiven optischen Elements gemessen. Die "schiefe Dicke" ist die Dicke, welche sich beim Lichtdurchgang durch das refraktive optische Element im Strahlengang einer vorgegebenen Gebrauchsstellung des refraktiven optischen Elements ergibt. So kann die tatsächliche Gebrauchsstellung des refraktiven optischen Elements bei der Bestimmung des diffraktiven Gitters besser berücksichtigt werden.

Die Gebrauchsstellung kann eine durchschnittliche oder eine individuelle Gebrauchsstellung sein. Bei einem Brillenglas als refraktives optisches Element kann die Gebrauchsstellung z.B. durch Parameter wie Hornhautscheitelabstand, Fassungsscheibenwinkel oder Seitenneigung, Vorneigung, Pupillendistanz und/oder andere geeignete, durchschnittliche oder individuelle Parameter charakterisiert werden. Ferner kann ein durchschnittliches oder individuelles Objektabstandsmodell berücksichtigt werden, z.B. ein Modell, welches jedem Hauptstrahl durch das Grundglas oder jeder Blickrichtung eine Objektentfernung zuordnet. Ein durchschnittliches Objektabstandsmodell und eine durchschnittliche Gebrauchsstellung sind z.B. in der Norm DIN 58 208 Teil 2 (vgl. Bild 6) offenbart. Die (vorgegebene) Messstellung kann z.B. die Scheitelmessstellung oder eine andere geeignete Messstellung des refraktiven optischen Elements sein.

In einem von den Ansprüchen nicht gedeckten Beispiel können die Gitterlinien des diffraktiven Gitters den Linien des konstanten Betrags des Prismas des refraktiven optischen Elements folgen, oder senkrecht zu der lokalen Basislage des Prismas des refraktiven optischen Elements stehen. Das Prisma des refraktiven optischen Elements kann das flächenhaft bestimmte Prisma, das Prisma in einer (vorgegebenen) Gebrauchsstellung oder das Prisma in einer (vorgegebenen) Messstellung des refraktiven optischen Elements sein.

Das flächenhaft bestimmte Prisma ist das Prisma, welches anhand der Flächeneigenschaften des refraktiven optischen Elements, ohne Berücksichtigung der tatsächlichen Gebrauchs- oder Messstellung des refraktiven optischen Elements berechnet wird. Das flächenhaft bestimmte Prisma kann jedoch von einem tatsächlichen Prisma, welches sich in einer Gebrauchs- oder Messstellung des refraktiven optischen Elements ergibt, abweichen. In einem bevorzugten Beispiel wird bei der Berechnung des Prismas eine (vorgegebene) Gebrauchs- oder Messstellung des refraktiven optischen Elements berücksichtigt. Somit kann eine bessere Farbsaumkorrektur in der tatsächlichen Gebrauchs- oder Messstellung des refraktiven optischen Elements erzielt werden.

Wie bereits oben ausgeführt, kann die (vorgegebene) Gebrauchsstellung eine individuelle oder eine durchschnittliche Gebrauchsstellung sein. Die (vorgegebene) Messstellung kann insbesondere die Scheitelmessstellung oder andere geeignete Messstellung sein.

Das Verfahren eignet sich zum schnellen und effizienten Bestimmen eines diffraktiven Gitters zur Farbsaumkompensation eines nicht rotationssymmetrischen refraktiven optischen Elements, insbesondere zur Farbsaumkompensation eines progressiven oder atorischen Brillenglases.

Ein weiterer Aspekt der Erfindung betrifft ein (computerimplementiertes oder computergestütztes) Verfahren zur Kompensation des Farbsaums eines nicht rotationssymmetrischen refraktiven optischen Elements, welches die Schritte Erfassen von Daten des refraktiven optischen Elements und Bestimmen zumindest eines diffraktiven Gitters nach einem beispielhaften, bevorzugten Verfahren zum Bestimmen eines diffraktiven Gitters umfasst. Das Verfahren kann ferner den Schritt des Fertigens des refraktiven optischen Elements mit dem berechneten diffraktiven Gitter umfassen.

Ebenfalls betrifft ein Aspekt der Erfindung ein Computerprogrammerzeugnis oder ein Speichermedium mit darauf gespeichertem Computerprogramm, wobei das Computerprogramm ausgelegt ist, wenn auf einem Computer geladen und ausgeführt, ein beispielhaftes, bevorzugtes Verfahren zum Bestimmen eines diffraktiven Gitters für ein nicht rotationssymmetrisches refraktives optisches Element durchzuführen.

Das Ziel des Verfahrens ist ein optisches Element umfassend ein nicht rotationssymmetrisches refraktives optisches Brillenglas (Grundelement) und zumindest ein diffraktives Gitter, wobei die Gitterlinien des zumindest einen diffraktiven Gitters den Linien konstanter Dicke des Brillenglases bzw. des Grundelements folgen.

Das refraktive optische Grundelement ist ein refraktives optisches Element (Brillenglas), welches keine diffraktiven Gitter aufweist. Somit entspricht das refraktive optische Grundelement dem refraktiven Anteil des gesamten optischen Elements. Wie bereits oben ausgeführt, kann das diffraktive Gitter auf eine oder auf mehreren Grenzflächen des refraktiven optischen Grundelements aufgebracht werden. Es ist ebenfalls möglich, ein Compoundsystem vorzusehen, welches aus einem Grundglas und einem Deckglas aufgebaut ist, wobei die Gitterstrukturen auf den geschützten Innenseiten des Grundglases und/oder des Deckglases (d.h. auf den sich gegenüber stehenden Seiten des Grund- und des Deckglases) aufgebracht sind.

Das zumindest eine diffraktive Gitter kann sich im Wesentlichen über den gesamten Winkelbereich des refraktiven optischen Elements, z.B. über den gesamten Blickwinkelbereich eines Brillenglases erstrecken. Beispiele geeigneter diffraktiver Gitter wurden bereits in Zusammenhang mit dem Verfahren zum Bestimmen eines diffraktiven Gitters angegeben.

Insbesondere sind die Gitterlinien des diffraktiven Gitters im allgemeinen Fall asymmetrische, geschlossene Kurven. Bei rotationssymmetrischen Elementen sind dagegen die Gitterlinien kreisförmige Kurven. Das refraktive Grundelement ist ein nicht rotationssymmetrisches optisches Element, insbesondere ein progressives oder atorisches Brillenglas.

Die Gitterlinien des zumindest einen diffraktiven Gitters folgen den Linien konstanter Dicke des refraktiven optischen Grundelements, wobei die Dicke des Grundelements die Dicke des Grundelements ist, welche entlang der schiefen Dicke in einer (vorgegebenen) Gebrauchsstellung des refraktiven optischen Grundelements, oder entlang der schiefen Dicke in einer (vorgegebenen) Messstellung des refraktiven optischen Grundelements gemessen wird.

In einem von den Ansprüchen nicht gedeckten Beispiel können die Gitterlinien des zumindest einen diffraktiven Gitters den Linien des konstanten Betrags des Prismas des refraktiven optischen Grundelements folgen oder senkrecht zu der lokalen Basislage des Prismas des refraktiven optischen Grundelements stehen. Dabei kann das Prisma des refraktiven optischen Grundelements das flächenhaft bestimmte Prisma, das Prisma in einer vorgegebenen Gebrauchsstellung oder das Prisma in einer vorgegebenen Messstellung des Grundelements (z.B. das Prisma in der Scheitelmessstellung) sein.

Ein weiterer Aspekt der Erfindung betrifft ein Verfahren zum Herstellen eines optischen Elements mit zumindest einem diffraktiven Gitter, umfassend die Schritte:

Bestimmen eines diffraktiven Gitters nach einem beispielhaften, bevorzugten Verfahren zum Bestimmen eines diffraktiven Gitters; und

Fertigen des optischen Elements mit dem zuvor bestimmten diffraktiven Gitter.

Das optische Element ist ein nicht rotationssymmetrisches Brillenglas.

Das Fertigen des optischen Elements kann ein Auf- oder Anbringen des berechneten diffraktiven Gitters auf zumindest einer Grenzfläche eines vorgefertigten refraktiven optischen Grundelements umfassen. Es ist jedoch möglich, das berechnete diffraktive Gitter und das Grundelement in einem gemeinsamen Fertigungsschritt oder -prozess anhand der Daten des optischen Grundelements und des berechneten zumindest einen diffraktiven Gitters zu fertigen. Verfahren zum Herstellen bzw. Fertigen von refraktiven optischen Elementen mit statischen oder schaltbaren diffraktiven Gittern oder Verfahren zum Auf- oder Anbringen von statischen oder schaltbaren diffraktiven Gittern auf refraktive optische Elemente (z.B. mittels lithographischer Verfahren, mittels CNC gesteuerter Maschinen, mittels Gießens, mittels Formation schaltbarer Strukturen, etc.) sind aus dem Stand der Technik bekannt.

Ferner wird gemäß einem weiteren Aspekt ein Verfahren zum Herstellen eines farbsaumkorrigierten optischen Elements mit den Schritten Bestimmen von zumindest einem diffraktiven Gitter nach einem bevorzugten beispielhaften Verfahren zum Bestimmen eines diffraktiven Gitters zur Farbsaumkompensation bereitgestellt. Das Verfahren kann ferner ein An- oder Aufbringen des berechneten diffraktiven Gitters auf zumindest eine Grenzfläche eines refraktiven Grundelements umfassen.

Des Weiteren wird eine Vorrichtung zum Herstellen eines optischen Elements mit zumindest einem diffraktiven Gitter vorgeschlagen, wobei die Vorrichtung

Gitterbestimmungsmittel, welche ausgelegt sind, ein diffraktives Gitter nach einem beispielhaften, bevorzugten Verfahren zum Bestimmen eines diffraktiven Gitters zu bestimmen; und

Bearbeitungsmittel, welche ausgelegt sind, das optische Element mit dem zuvor bestimmten diffraktiven Gitter zu fertigen, umfasst.

Das optische Element ist ein nicht rotationssymmetrisches Brillenglas.

Insbesondere umfassen die Gitterbestimmungsmittel:

Erfassungsmittel zum Erfassen von Daten eines refraktiven optischen Elements;

Gitterberechnungsmittel, welche ausgelegt sind, ein Berechnen des zumindest einen diffraktiven Gitters anhand der erfassten Daten des refraktiven optischen Elements derart vorzunehmen, dass die Gitterlinien des diffraktiven Gitters den Linien konstanter Dicke des refraktiven optischen Elements folgen.

Die Vorrichtung kann ferner Speichermittel, welche ausgelegt sind Daten (z.B. Bearbeitungsdaten) des berechneten diffraktiven Gitters und/oder des Grundelements zu speichern, umfassen.

Ein weiter Aspekt der Erfindung betrifft ein Brillenglas mit mindestens einem diffraktiven Gitter, dessen Gitterlinien nicht rotationssymmetrisch sind. Das Brillenglas kann ein nicht rotationssymmetrisches Brillenglas, insbesondere ein progressives oder atorisches Brillenglas, sein. Ferner betrifft ein weiterer Aspekt der Erfindung ein nicht rotationssymmetrisches Brillenglas, insbesondere ein progressives oder atorisches Brillenglas mit mindestens einem diffraktiven Gitter, dessen Gitterlinien den Isolinien der Glasdicke folgen.

Gemäß einem weiteren Aspekt wird ein Verfahren zur Bestimmung eines diffraktiven Gitters zur Farbsaumkompensation bei nicht rotationssymmetrischen Brillengläsern bereitgestellt. Das Verfahren umfasst eine Berechnung des diffraktiven Gitters derart, dass die Gitterlinien des diffraktiven Gitters den Isolinien der Glasdicke folgen. Die Glasdicke ist dabei die Dicke, die entlang der schiefen Dicke in Gebrauchsstellung gemessen wird.

Durch Aufbringung eines nicht rotationssymmetrischen diffraktiven Gitters auf mindestens eine der Flächen eines refraktiven optischen Elements, wie eines Brillenglases, ist es möglich, den Farbsaum, den das refraktive optische Element aufgrund seiner refraktiven Wirkung hat, zumindest teilweise zu reduzieren oder zu kompensieren.

Weiteren Aufgaben, Merkmale und Vorteile der vorliegenden Erfindung werden aus der nachfolgenden Beschreibung beispielhafter Ausführungsformen mit Bezug auf die Zeichnungen ersichtlich. Es zeigen:

Fig. 1    die Beugung einer ebenen Wellenfront beim Einfall auf eine Grenzfläche mit einer periodischen Struktur;

Fig. 2    die Winkelverteilung der Intensität bei einem Sägezahngitter, welches auf einer der Flächen eines Prismas aufgebracht ist;

Fig. 3    die Beugungseffizienz als Funktion der Wellenlänge;

Fig. 4    das Prinzip der Farbsaumkorrektur durch ein diffraktives Gitter;

Fig. 5    die Gitterlinien des diffraktiven Gitters, die Isolinien der Glasdicke und das Vektorfeld der prismatischen Wirkung $\mathbf{Pr}(\mathbf{r};\lambda)$ eines Brillenglases;

Fig. 6    den Farbsaum eines unkorrigierten Einstärkenglases mit einer Abbezahl von 58,5 (Fig. 6A) und mit einer Abbezahl von 40,5 (Fig. 6B);

Fig. 7    den Farbsaum eines unkorrigierten progressiven Brillenglases;

Fig. 8    den Strahlverlauf im Fall einer ebenen Grenzfläche mit einem diffraktiven Gitter;

Fig. 8A    die gegenseitige Lage des Koordinatensystems der einfallenden Wellenfront und des Koordinatensystems der Grundfläche;

Fig. 9    die Gitterlinien eines einfach periodischen, diffraktiven Gitters auf einer ebenen Grenzfläche;

Fig. 10    die Gitterlinien eines diffraktiven Gitters auf einer ebenen Grenzfläche;

Fig. 11    die Gitterlinien eines diffraktiven Gitters auf einer gekrümmten Grenzfläche;

Fig. 12    ein Ablaufschema, welches den Übergang zwischen dem Vektorfeld $\mathbf{d}(\overline{x}^0,\overline{y}^0)$ und der Phasenfunktion $\psi^0(\overline{x}^0,\overline{y}^0)$ illustriert.

Nachfolgend wird die Farbsaumkorrektur durch ein diffraktives Gitter im Detail beschrieben. Die nachfolgenden Beispiele beziehen sich auf ein Brillenglas als refraktives optisches Element, dessen Farbsaum mittels eines diffraktiven Gitters zumindest teilweise kompensiert bzw. korrigiert werden kann. Alle Ausführungen sind jedoch auf beliebige refraktive optische Elemente (wie z.B. Linsen, etc.), deren Farbsaum korrigiert werden soll, anwendbar.

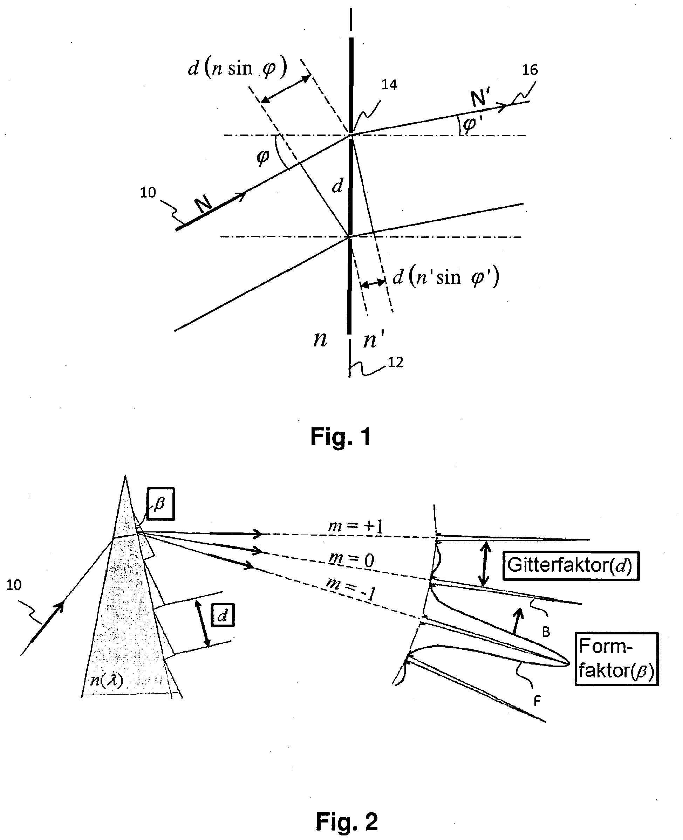

**Fig. 1** zeigt schematisch die Lichtbeugung bei Einfall einer ebenen Wellenfront 10 auf eine Grenzfläche 12 mit einer periodischen Struktur 14 (diffraktives Gitter). Aufgrund der Interferenz entsteht eine winkelabhängige Verteilung der Intensität der ausfallenden Wellenfront 16, welche mehrere Beugungsmaxima aufweist. Die Interferenzbedingung ist $d(n'\sin\varphi')-d(n\sin\varphi)=m\lambda$. Hierbei ist $\lambda$ die Wellenlänge, $\varphi,\varphi'$ die Ein- und Ausfallswinkel, $n,n'$ die beiden Brechungsindizes (vor und nach der Grenzfläche mit dem Gitter) und $d$ die Gitterkonstante. Die Winkelverteilung der Intensität kann als Produkt aus zwei Faktoren, nämlich dem Beugungsfaktor und dem Formfaktor, geschrieben werden. Die Positionen der Maxima des Beugungsfaktors hängen nur von der Gitterkonstanten $d$ und der Anzahl der Gitterlinien ab, die Maximumsposition des Formfaktors dagegen nur von der Elementarstruktur des Gitters (z.B. bei Sägezahnform vom Blazing-Winkel $\beta$).

Ein Hauptmerkmal eines diffraktiven Gitters ist dabei der Beugungsfaktor, der beschreibt, dass die Intensitätsverteilung mehrere Maxima enthält, die sich nach den Beugungsordnungen $m$ durchzählen lassen. Diese folgen einem modifizierten Brechungsgesetz $n'\sin\varphi'-n\sin\varphi=m\lambda/d$. Lediglich das Maximum der 0-ten Beugungsordnung ($m = 0$) genügt dem klassischen Brechungsgesetz. Alle anderen Richtungen kämen refraktiv nicht vor. Im Strahlenbild bedeutet dies, dass ein Strahl in mehrere Teilstrahlen aufgespalten wird. Wie sich die Intensität auf die einzelnen Beugungsordnungen aufteilt, wird durch den Formfaktor bestimmt. **Fig. 2** zeigt schematisch die Winkelverteilung der Intensität bei einem Sägezahngitter 14, welches auf einer der Flächen eines Prismas 20 aufgebracht ist. Die Linie F entspricht dem Formfaktor, die Linie B dem Beugungsfaktor.

Bei der Übertragung dieser Grundsachverhalte auf optische Elemente (z.B. Prismen, Linsen, Brillengläser, etc.) muss berücksichtigt werden, dass ein optisches Element zumindest zwei Grenzflächen besitzt. Dabei ist es üblich

1) Polarisationseffekte zu vernachlässigen, d.h. mit der skalaren Beugungstherorie weiterhin auszukommen,
2) das Rayleigh-Sommerfeldsche Beugungsintegral mit Fraunhofer- oder höchstens Fresnel-Beugung zu betrachten,
3) nur Fernfeldinterferenzen zu betrachten und
4) Streuungseffekte zu vernachlässigen.

Die dritte Annahme wird oft stillschweigend getroffen. Diese ist jedoch gültig, solange die beiden Glasflächen weiter voneinander entfernt sind als die Kohärenzlänge von Tageslicht oder Glühlampenlicht von $3\mu m$. Dies ist in der Regel bei Brillengläsern der Fall.

Der Farbsaum von optischen Elementen im Allgemeinen beruht darauf, dass diese zumindest zwei refraktive Grenzflächen aufweisen, wobei die beiden kombinierten refraktiven Grenzflächen eines optischen Elements eine wellenlängenabhängige prismatische Wirkung $Pr_{ref}$ besitzen. Die Anwendung von diffraktiver Optik zur Farbsaumkorrektur basiert darauf, auf zumindest einer der refraktiven Grenzflächen des optischen Elements ein diffraktives Gitter aufzubringen, für das aufgrund des diffraktiv modifizierten Brechungsgesetzes für $m\#0$ eine zusätzliche prismatische Wirkung $Pr_{diff}$ eingeführt wird.

Bei geeigneter Auslegung oder Dimensionierung des diffraktiven Gitters (insbesondere der Periode $d$ des diffraktiven Gitters) gibt es dann eine Ordnung $m=m_0$, für welche die Wellenlängenabhängigkeit von $Pr_{diff}$ der gewöhnlichen Dispersion des refraktiven Prismas $Pr_{ref}$ entgegengesetzt ist und ein derartige Größe hat, dass das Gesamtprisma $Pr=Pr_{ref}+Pr_{diff}$ nahezu wellenlängenunabhängig ist. Um genau für diese Ordnung $m_0$ eine möglichst hohe Intensität zu erreichen, d.h. um die Beugungseffizienz zu maximieren, kann die Gitterform geeignet gestaltet werden. Bei einem Sägezahngitter erfolgt dies durch eine geeignete Wahl des Blazing-Winkels.

Ein diffraktives Gitter, welches zur Korrektur des Farbsaums eines vorgegebenen Brillenglases dient, kann z.B. wie folgt ermittelt werden:

1) Modellbildung im wellenoptischen Bild;
2) Aus der wellenoptischen Intensitätsverteilung wird eine bestimmte Ordnung selektiert. Die Gitterkonstante wird so gewählt, dass der "Peak" dieser Ordnung wellenlängenunabhängig ist. Dadurch wird eine Farbsaumkorrektur ermöglicht. Die Form des Gitters (z.B. der Blazing-Winkel bei einem Sägezahngitter) wird so eingestellt, dass die Beugungseffizienz für diese Ordnung maximal ist. Schließlich wird die Ausfallsrichtung für diesen Peak durch einen Strahl beschrieben (geometrisches Strahlenbild, ray-tracing)
3) Bestimmen des diffraktiven Gitters nach dem Verfahren gemäß einem bevorzugten Beispiel der Erfindung.

**Modellbildung im wellenoptischen Bild**

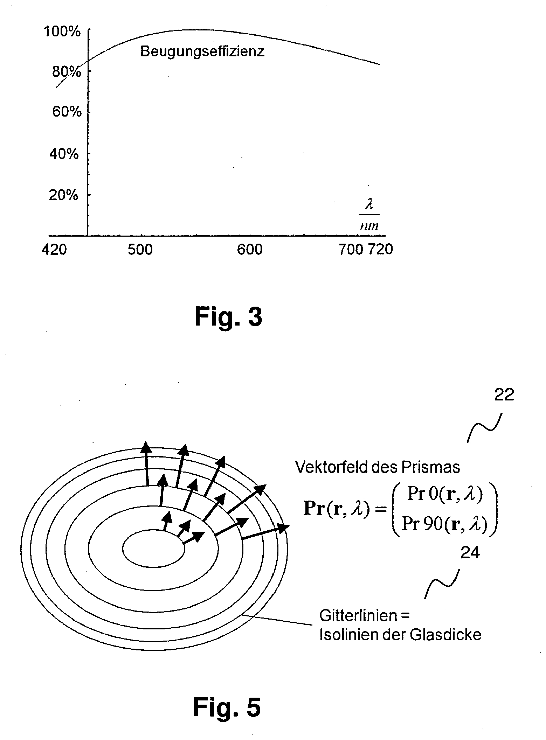

Eine zentrale Größe der Wellenoptik ist die Verteilung von Amplitude und Phase. Durch die Berechnung des Beugungsintegrals kann die Aufspaltung in Form- und Beugungsfaktor reproduziert werden. Unabhängig davon, wie sich die Beugungsordnungen später zur Farbsaumkorrektur nutzen lassen, ist es vorteilhaft, dass die Intensität möglichst nur in einer einzigen Ordnung gesammelt wird. So kann z.B. mit Hilfe eines Sägezahngitters mit einem bestimmten Blazing-Winkel erreicht werden, dass zumindest bei einer definierten bzw. vorgegebenen Designwellenlänge praktisch eine Beugungseffizienz von ungefähr 100% für die gewählte Beugungsordnung erreicht werden kann. **Fig. 3** zeigt die Beugungseffizienz als eine Funktion der Wellenlänge. Wie aus Fig. 3 ersichtlich, kann ebenfalls erreicht werden, dass am Rande des sichtbaren Wellenlängenbereichs die Beugungseffizienz noch typischerweise Werte zwischen 70% und 90% annimmt.

Der Formfaktor ist eine relativ breite Glockenfunktion, die genau entlang derjenigen Richtung zentriert ist, die aufgrund der Steigung der Flächenabschnitte im Gitter auch schon nach dem klassischen Brechungsgesetz die Ausfallsrichtung wäre. Je nach Profil des Gitters (z.B. je nach Blazing-Winkel) kann diese Richtung nun auf ein Beugungsmaximum einer gewünschten Beugungsordnung verschoben werden (siehe Fig. 2). Alle anderen Beugungsmaxima werden dann gleichzeitig unterdrückt. Die Richtungsabhängigkeit des Formfaktors gilt unabhängig von der Gitterkonstanten und bedeutet, dass sich über den kompletten Übergang hinweg, welcher sich von DOEs über MODs hin zu Fresnel-Gittern vollziehen lässt, Licht immer in der Nähe des klassischen Brechungsgesetzes ausfällt.

**Farbsaumkorrektur**

Wenn kein diffraktives Gitter vorhanden ist, wird die Intensitätsverteilung durch eine Kurve gegeben, deren Maximum durch die Kurve "F" des Formfaktors in Fig. 2 gegeben wäre. Der Peak aber wäre viel schmaler und wäre durch die Breite des Einfachspalts bestimmt, den die komplette Linse darstellt. Die Wellenlängenabhängigkeit der Maximumposition wäre dann durch die gewöhnliche Dispersion gegeben.

Bei Anwesenheit eines diffraktiven Sägezahngitters ändert sich daran nichts, außer dass die Breite des Formfaktor-Peaks nun um Größenordnungen zunimmt und durch den Einfachspalt bestimmt wird, der nun durch eine Gitterperiode gegeben ist (siehe Kurve "F" in Fig. 2). Das Dispersionsverhalten dieses Peaks ist dasselbe wie ohne Gitter, aber der Peak bestimmt nicht mehr alleine die Intensitätsverteilung, weil diese nun zusätzlich durch die scharfen Peaks des Beugungsfaktors eingeschränkt wird. Derjenige dieser Peaks, der bei einer Arbeitswellenlänge zentral auf dem Formfaktor liegt, enthält die ganze Intensität und bestimmt *de facto* die Ausfallsrichtung des Lichts. Die Beugungseffizienz liegt dann bei annähernd 100%. Ziel ist es, die Position dieses Peaks wellenlängenunabhängig zu machen, so dass eine Farbsaumkorrektur erreicht wird.

Variiert nun die Wellenlänge, dann wandert der Formfaktor langsam über diesen konstanten Peak, mit nur geringen Verlusten an Beugungseffizienz, hinweg (siehe Fig. 3).

**Geometrisches Strahlenbild und Farbsaumkorrektur**

Wir bereits oben ausgeführt, können durch eine geeignete Wahl des Profils des diffraktiven Gitters alle Beugungsmaxima zugunsten eines einzigen außer Acht gelassen werden. Die Ausfallsrichtung des verbliebenen Beugungsmaximums kann im geometrischen Strahlenbild durch das modifizierte Brechungsgesetz $n'\sin\varphi'-n\sin\varphi=m\lambda/d$ beschrieben werden.

Für eine Farbsaumkorrektur eines (lokalen) Prismas wird verlangt, dass die prismatische Ablenkung eines Strahls, welcher durch beide Grenzflächen des Prismas fällt und durch das Prisma abgelenkt wird, für eine vorgegebene Wellenlänge (Designwellenlänge) wellenlängenunabhängig ist. Die Wellenlängenunabhängigkeit ist im Sinne einer verschwindenden Ableitung nach der Wellenlänge zu verstehen.

Anhand dieser Bedingung kann dann die Gitterkonstante d ermittelt werden, welche proportional zur Abbezahl und der Beugungsordnung und umgekehrt proportional zum Prisma ist. Überaschenderweise hat sich herausgestellt, dass der so ermittelte Wert der Gitterkonstante nicht (wie erwartet) in der Größenordnung der Wellenlänge, sondern z.B. für ein Prisma von $4cm/m$ und bei einer Abbezahl $v_d\approx40$ bei einem Wert von über $d\approx100\mu m$ liegt. Dies kann damit erklärt werden, dass nicht eine Brechkraft, sondern nur der geringere Effekt der Farbsaumkorrektur erreicht werden soll.

Wie oben gezeigt wurde, ist diejenige Beugungsordnung, für welche eine Farbsaumkorrektur eintritt, immer so gerichtet, dass eine Verstärkung des ursprünglichen Prismas eintritt. Das Gesamtprisma $Pr=Pr_{ref}+Pr_{diff}$ liegt dabei im Betrag immer um ca. 5% bis 10% über dem Betrag $|Pr_{ref}|$ des rein refraktiven Anteils.

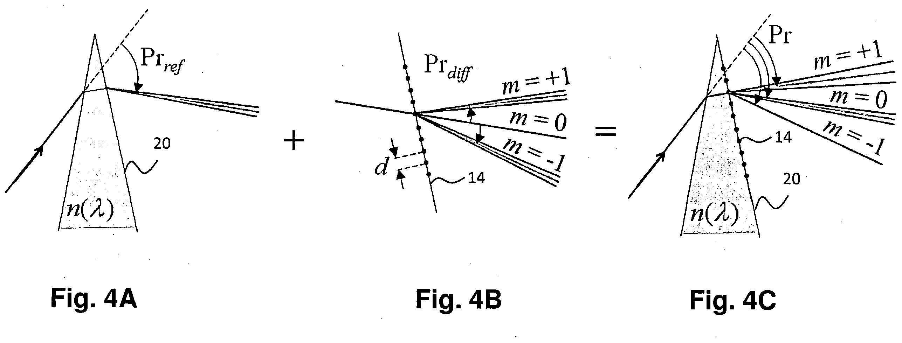

**Fig. 4** zeigt das Prinzip der Farbsaumkorrektur durch ein diffraktives Gitter bei einem refraktiven Prisma. **Fig. 4A** zeigt den Farbsaum eines Prismas 20 mit einem Prismenwinkel $\alpha$, welcher durch die wellenlängenabhängige prismatische Wirkung $Pr_{ref}$ des Prismas 20 bedingt ist. **Fig. 4B** zeigt die wellenlängenabhängige Beugung durch das diffraktive Gitter 14. **Fig. 4C** zeigt die kombinierte Wirkung des Prismas 20 und des diffraktiven Gitters 14. Für die gegebene Gitterkonstante d findet eine Farbsaumkorrektur in der Ordnung $m = -1$ statt. Die wellenlängenabhängige prismatische Wirkung des Prismas 20 ist $\mathrm{Pr}_{ref} = -(n(\lambda)-1)\alpha$. Das diffraktive Gitter 14 mit der Gitterkonstante d hat eine prismatische

$$\mathrm{Pr}_{diff} = \frac{m\lambda}{d} .$$

Wirkung    Die kombinierte Wirkung des Prismas 20 mit dem Gitter 14 ist $\mathrm{Pr} = \mathrm{Pr}_{ref} + \mathrm{Pr}_{diff}$. Für eine

$$\frac{\partial \mathrm{Pr}}{\partial \lambda}\bigg|_{\lambda=\lambda_D} = 0$$

Farbsaumkorrektur wird verlangt, dass    für eine vorgegebene Designwellenlänge $\lambda_D$ ist. Für die

$$d \approx \frac{m}{\alpha \cdot \partial n / \partial \lambda} .$$

Gitterkonstante ergibt sich dann

Soll statt an einem Prisma der Farbsaum an einem optischen Element mit gekrümmten Flächen korrigiert werden, können die Ergebnisse der Farbsaumkorrektur mittels eines Prismas auf die Farbsaumkorrektur des optischen Elements übertragen werden, indem der Wert von d lokal so einstellt wird, dass er das lokale Prisma korrigiert. Im Allgemeinen ist das so ermittelte Gitter jedoch nicht mehr äquidistant (d.h. weist keine äquidistanten Gitterlinien auf). In der Regel variiert jedoch die nun variable Funktion $d(r)$ so langsam, dass die Modellvorstellung der Periodizität, die zur Herleitung der wellenoptischen Gleichungen verwendet wurde, näherungsweise gültig bleibt.

Wie bereits oben ausgeführt, entsteht bei einem refraktiven optischen Element (wie z.B. einer Linse, einem Prisma, einem Brillenglas, etc.), welches durch rein refraktive Flächen begrenzt ist, ein Farbsaum als Folge von zwei aufeinanderfolgenden Brechungen, bei denen jeweils kurzwelliges Licht stärker gebrochen wird als langwelliges. Der Farbsaum ist ein lokales Phänomen, das sich durch die kombinierte lokale prismatische Wirkung beider Einzelflächen gut beschreiben lässt, d.h. durch das Gesamtprisma, das durch die lokale Verkippung der beiden Flächen zueinander um einen Prismenkeilwinkel $\alpha$ entsteht. Anhand eines solchen Prismas kann auch die Auswirkung zusätzlicher diffraktiver Gitter beschrieben werden, die auf der Prismenvorderfläche (Fläche 1) oder der Prismenrückfläche (Fläche 2) oder auf beiden Flächen (nachfolgend auch Grenzflächen genannt) aufgebracht werden können.

Für jedes Gitter, welches auf zumindest einer der Flächen 1 oder 2 aufgebracht ist, kann eine entsprechende Phasenfunktion $\Psi_{1,2}$ eingeführt werden. Die Phasenfunktion $\Psi(\overline{x},\overline{y})$ stellt die optische Pfadlängendifferenz (Optical Path Difference oder OPD), welche durch das diffraktive Gitter eingeführt wird, als Funktion der Koordinaten $\overline{x},\overline{y}$ tangential zur brechenden Fläche dar. Das Koordinatensystem $\overline{x},\overline{y},\overline{z}$ ist ein lokales Koordinatensystem, welches dazu dient, den Durchtritt eines Strahls durch eine Grenzfläche zu beschreiben, wobei am Durchstoßpunkt des Hauptstrahls mit der Grenzfläche $(\overline{x},\overline{y},\overline{z}) = (0,0,0)$ gilt, und wobei die $\overline{z}$-Achse dort senkrecht zur Grundfläche steht. Eine spezielle mögliche Wahl eines solchen lokalen Systems besteht darin, zu fordern, dass der einfallende Strahl beispielsweise in der $\overline{x}$-$\overline{z}$-Ebene oder in der $\overline{y}$-$\overline{z}$-Ebene liegt. Im Allgemeinen muss jedoch diese Bedingung nicht notwendigerweise erfüllt sein. Die Verwendung von lokalen Koordinatensystemen ist z.B. aus WO 2008/089999 A1 bekannt und wird z.B. bei der Wellenfrontdurchrechnung 2.Ordnung durch Flächen ohne diffraktives Gitter verwendet. Typischerweise werden so viele lokale Systeme, wie Hauptstrahlen gerechnet werden sollen, verwendet. Darüber hinaus kann ein globales Koordinatensystem verwendet werden.

Der an einer der Grenzflächen einfallenden Wellenfront 14 kann der Richtungsvektor

$$\mathbf{N} = \begin{pmatrix} \sin \varphi_x \\ \sin \varphi_y \\ \sqrt{1 - \sin^2 \varphi_x - \sin^2 \varphi_y} \end{pmatrix}$$

zugeordnet werden (siehe Fig. 1). Der Richtungsvektor

$$\mathbf{N}' = \begin{pmatrix} \sin \varphi'_x \\ \sin \varphi'_y \\ \sqrt{1 - \sin^2 \varphi'_x - \sin^2 \varphi'_y} \end{pmatrix}$$

kann der ausfallenden Wellenfront 16 zugeordnet werden (siehe Fig. 1). Eine Wellenfrontdurchrechnung für die Durchrechnung von Strahlen, welche in einem lokalen Koordinatensystem $(\overline{x},\overline{y},\overline{z})$ durch die Richtungsvektoren $\mathbf{N},\mathbf{N}'$ beschrieben werden, ergibt für die allgemeinen Gesetze für die Strahlablenkung:

$$n'_1 \sin \varphi'_1 - n_1 \sin \varphi_1 = \frac{\partial}{\partial r} \Psi_1(\overline{x}, \overline{y}; \lambda, m_1)$$

$$n'_2 \sin \varphi'_2 - n_2 \sin \varphi_2 = \frac{\partial}{\partial r} \Psi_2(\overline{x}, \overline{y}; \lambda, m_2)$$

$$(1)$$

wobei:

$n'_1$ den Brechungsindex des Materials nach der Grenzfläche 1;
$n_1$ den Brechungsindex des Materials vor der Grenzfläche 1;
$n'_2$ den Brechungsindex des Materials nach der Grenzfläche 2;
$n_2$ den Brechungsindex des Materials vor der Grenzfläche 2;
$\varphi_1$ den Einfallswinkel des Strahls auf die Grenzfläche 1;
$\varphi'_1$ den Austrittswinkel des Strahls nach der Brechung an der Grenzfläche 1;
$\varphi_2$ den Einfallswinkel des Strahls auf die Grenzfläche 2;
$\varphi'_2$ den Austrittswinkel des Strahls nach der Brechung an der Grenzfläche 2; sowie
$m_1$ und $m_2$ die Beugungsordnungen

bezeichnen.

In einer ersten Annäherung eines optischen Elements mit einem diffraktiven Gitter kann die obige allgemeine Formel statt auf die Raumdimensionen $\overline{x}, \overline{y}$ bzw. $x,y$ nur auf eine Raumdimension $\overline{x}$ bzw. $x$ angewendet werden (eindimensionaler Fall). Werden ferner nur diejenigen Strahlen betrachtet, welche in der Ebene senkrecht zur Prismenkante verlaufen, dann ist es ausreichend, statt den Winkeln $\varphi_x$ und $\varphi_y$ einen Winkel $\varphi$ zu verwenden.

An den (Grenz-)Flächen 1 und 2 gilt dann entsprechend:

$$n'_1 \sin \varphi'_1 - n_1 \sin \varphi_1 = \frac{\partial}{\partial r} \Psi_1(x; \lambda, m_1)$$

$$n'_2 \sin \varphi'_2 - n_2 \sin \varphi_2 = \frac{\partial}{\partial r} \Psi_2(x; \lambda, m_2)$$

$$(1a)$$

In einer paraxialen Näherung gilt $\sin \varphi'_1 \approx \varphi'_1$, $\sin \varphi'_2 \approx \varphi'_2$ etc.. Sind ferner die Grenzflächen 1 und 2 (z.B. die Grenzflächen eines Brillenglases) von Luft umgeben, dann gilt $n_1=1$, $n'_1=n$, $n_2=n$, $n'_2=1$, wobei $n$ der Brechungsindex des optischen Materials zwischen den Grenzflächen ist.

$$n \varphi'_1 - \varphi_1 = \frac{\partial}{\partial r} \Psi_1(x; \lambda, m_1)$$

$$\varphi'_2 - n \varphi_2 = \frac{\partial}{\partial r} \Psi_2(x; \lambda, m_2)$$

$$(1b)$$

**Farbsaum eines Prismas mit einem diffraktiven Gitter**

In diesem einfachen Fall kann die Gleichung (1b) auf den Lichtdurchgang durch ein Prisma mit einem lokalen Prismenkeilwinkel $\alpha(x)$ angewendet werden. Für die lokale wellenlängenabhängige Winkelablenkung gilt dann:

$$\Delta\varphi(x;\lambda) := \varphi'_2 - \varphi_1 + \alpha(x) = -(n(\lambda) - 1)\alpha(x) + \frac{\partial}{\partial x}\Psi(x;\lambda) \tag{2}$$

wobei

$$\Psi(x;\lambda) := \Psi_1(x;\lambda,m_1) + \Psi_2(x;\lambda,m_2) \tag{3}$$

gilt.

Das bedeutet, dass sich die totale Winkeländerung additiv aus zwei Beiträgen zusammen setzt, nämlich aus einem refraktiven und einem diffraktiven Anteil:

$$\Delta\varphi(x;\lambda) = \Delta\varphi_{\mathrm{ref}}(x;\lambda) + \Delta\varphi_{\mathrm{diff}}(x;\lambda) \tag{4}$$

wobei

$$\Delta\varphi_{\mathrm{ref}}(x;\lambda) = -(n(\lambda) - 1)\alpha(x)$$

$$\Delta\varphi_{\mathrm{diff}}(x;\lambda) = \frac{\partial}{\partial x}\Psi(x;\lambda) \tag{5}$$

Dabei können $\Delta\varphi_{\mathrm{ref}}(x;\lambda)$ als das refraktive Prisma oder das Grundprisma, $\Delta\varphi_{\mathrm{diff}}(x;\lambda)$ als das diffraktive Prisma und $\Delta\varphi(x;\lambda)$ als das Gesamtprisma bezeichnet werden.

Ein Maß für den Farbsaum *FS* eines optischen Elements (z.B. eines Prismas, einer Linse, eines Brillenglases, etc.) ist die absolute Winkelbreite des Farbsaums

$$FS = \left| \Delta\varphi(x;\lambda_{F'}) - \Delta\varphi(x;\lambda_{C'}) \right|,$$

wobei die Indizes *e, F',* C' für die bestimmten Wellenlängen stehen, durch welche die Abbezahl $v_e=(n_e-1)/(n_F-n_{C'})$ definiert ist. Hier sind $n_e$, $n_{F'}$, $n_{C'}$ die Brechzahlen des optischen Materials bei den Wellenlängen $\lambda_e$=546,073nm, $\lambda_F$= 479,99nm, $\lambda_C$=643,85nm.

Alternativ kann als Maß für den Farbsaum die absolute Winkelbreite

$$FS = \left| \Delta\varphi(x;\lambda_F) - \Delta\varphi(x;\lambda_C) \right|$$

entsprechend der alternativen Abbezahl $v_d=(n_d-1)/(n_F-n_C)$ verwendet werden. In diesem Fall stehen die Indizes *d, F, C* für die bestimmten Wellenlängen, durch die die alternative Abbezahl $v_d=(n_d-1)/(n_F-n_C)$ definiert ist. Hier sind $n_d$, $n_F$ und $n_C$ die Brechzahlen des optischen Materials bei den Wellenlängen $\lambda_d$=587,562 nm, $\lambda_F$=486,134 nm und $\lambda_C$=656,281 nm.

Nachfolgend wird als Maß für den Farbsaum die absolute Winkelbreite $FS=|\Delta\varphi(x;\lambda_F)-\Delta\varphi(x;\lambda_C)|$ entsprechend der alternativen Abbezahl $v_d=(n_d-1)/(n_F-n_C)$ verwendet. Selbstverständlich können die nachfolgenden Formeln entsprechend auch für den Fall angewendet werden, dass der Farbsaum durch $FS=|\Delta\varphi(x;\lambda_{F'})-\Delta\varphi(x;\lambda_{C'})|$ oder z.B. durch andere Wellenlängen definiert wird. In diesem Fall tritt an Stelle des Index d der Index e, anstelle des Index F der Index *F'*, und anstelle des Index *C* der Index *C'*.

Es ist zweckmäßig, eine vorzeichenabhängige Definition des Farbsaums zu verwenden, z.B.

$$FS(x) = \Delta\varphi(x;\lambda_F) - \Delta\varphi(x;\lambda_C) \tag{6}$$

wobei ein negativer Winkel für eine Strahlablenkung nach unten steht (also zu kleineren Werten von $x$) und ein positiver nach oben (also zu größeren Werten von $x$). Wegen der Additivität des refraktiven und des diffraktiven Anteils in Gleichung (4) kann der Farbsaum als Summe eines refraktiven Farbsaums $FS_{ref}$ und eines diffraktiven Farbsaums $FS_{diff}$ dargestellt werden:

$$FS = FS_{ref} + FS_{diff} \tag{7}$$

Der refraktive Farbsaum ist durch das Prisma geteilt durch die Abbezahl gegeben:

$$
\begin{aligned}
FS_{ref} = FS_{ref}(x) &= \Delta\varphi_{ref}(x;\lambda_F) - \Delta\varphi_{ref}(x;\lambda_C) \\
&= \frac{\Delta\varphi_{ref}(x;\lambda_F) - \Delta\varphi_{ref}(x;\lambda_C)}{\Delta\varphi_{ref}(x;\lambda_d)} \Delta\varphi_{ref}(x;\lambda_d) \\
&= \frac{-(n_F-1)\alpha - (-(n_C-1)\alpha)}{-(n_d-1)\alpha} \Delta\varphi_{ref}(x;\lambda_d) \\
&= \frac{\Delta\varphi_{ref}(x;\lambda_d)}{v_d},
\end{aligned}
\tag{8}
$$

Der diffraktive Farbsaumbeitrag ist durch

$$
\begin{aligned}
FS_{diff} = FS_{diff}(x) &= \Delta\varphi_{diff}(x;\lambda_F) - \Delta\varphi_{diff}(x;\lambda_C) \\
&= \frac{\partial}{\partial x}\Psi(x;\lambda_F) - \frac{\partial}{\partial x}\Psi(x;\lambda_C)
\end{aligned}
\tag{9}
$$

gegeben.

Damit eine "ideale" Farbsaumkompensation des refraktiven Farbsaums durch den diffraktiven Beitrag stattfinden kann, muss

$$FS_{ref} + FS_{diff} = 0 \tag{10}$$

gelten.

Soll der Farbsaum für ein Prisma mit refraktiver prismatischer Wirkung $\Delta\varphi_{ref}=\Delta\varphi_{ref,0}$ vollständig korrigiert werden, dann muss das diffraktive Gitter so gewählt werden, dass

$$
\begin{aligned}
FS_{diff}(x) &= -\frac{\Delta\varphi_{ref,0}(x;\lambda_d)}{v_d} \\
\Delta\varphi_{diff}(x;\lambda_F) - \Delta\varphi_{diff}(x;\lambda_C) &= -\frac{\Delta\varphi_{ref,0}(x;\lambda_d)}{v_d}
\end{aligned}
\tag{11}
$$

erfüllt ist. Dies kann z.B. durch ein Gitter mit

$$\Delta\varphi_{\text{diff}}(x;\lambda) = -\frac{\Delta\varphi_{\text{ref},0}(x;\lambda_d)}{v_d} \cdot \frac{\lambda}{\lambda_F - \lambda_C} \tag{12}$$

erreicht werden (siehe z.B. Fig. 4).

**Farbsaum eines rotationssymmetrischen optischen Elements mit einem diffraktiven Gitter**

Rotationssymmetrische optische Elemente (z.B. rotationssymmetrische Brillengläser) können statt durch zwei unabhängige Koordinaten $x$ und $y$ durch einen einzigen Freiheitsgrad beschrieben werden. Wird dieser Freiheitsgrad mit $r$ bezeichnet, dann können für die Meridionalstrahlen die Gleichungen (1) bis (12) angewendet werden, indem dort $x$ durch $r$ ersetzt wird. Die Prentice'sche Regel besagt, dass $\Delta\varphi_{\text{ref}}(r,\lambda_d)=-S_{\text{ref}}(\lambda_d)r$ ist. Hierbei steht $S_{\text{ref}}$ für die refraktive dioptrische Wirkung des Glases, die aufgrund der Flächenkrümmungen zustandekommt und $r$ für den Abstand von der optischen Mitte oder dem Scheitel des Brillenglases. Unter "Wirkung" des Glases kann auch der Scheitelbrechwert des Glases, der Brechwert, die Brechkraft oder ein sonstiges Maß für die Wirkung verstanden werden.
Der refraktive Farbsaum nach Gleichung (8) ist in diesem Fall

$$FS_{\text{ref}}(x) = \frac{-S_{\text{ref}}(\lambda_d)r}{v_d} \tag{13}$$

Der diffraktive Farbsaum eines passend zur refraktiven Wirkung $S_{\text{ref},0}$ gewählten Gitters ist nach Gleichung (11)

$$FS_{\text{diff}}(r) = -\frac{-S_{\text{ref},0}(\lambda_d)r}{v_d} \tag{14}$$

Der gesamte Farbsaum ergibt sich nach Gleichung (13) zu

$$FS(r) = -\frac{(S_{\text{ref}} - S_{\text{ref},0})r}{v_d} \tag{15}$$

Der Farbsaum eines rotationssymmetrischen Einstärkenglases ist nach Gleichung (13) proportional zur Wirkung und zum Abstand $r$.
Soll der Farbsaum für das Glas mit refraktiver Wirkung $S_{\text{ref}}(\lambda_d)=S_{\text{ref},0}(\lambda_d)$ vollständig korrigiert werden, dann muss das diffraktive Gitter so gewählt werden, dass Gleichung (14) erfüllt ist, d.h. dass die Bedingung

$$\Delta\varphi_{\text{diff}}(r;\lambda_F) - \Delta\varphi_{\text{diff}}(r;\lambda_C) = \frac{S_{\text{ref},0}(\lambda_d)r}{v_d} \tag{11a}$$

erfüllt ist.

**Farbsaum eines nicht-rotationssymmetrischen optischen Elements mit einem diffraktiven Gitter**

Hat z.B. ein Einstärkenglas zusätzlich zu der Wirkung ebenfalls einen Zylinder, fehlt die Rotationssymmetrie. In diesem Fall werden zwei Freiheitsgrade $x$ und $y$ benötigt, die sich zu einem Vektor $\mathbf{r}$ zusammenfassen lassen. Wie aus der Gleichung (1) ersichtlich, gibt es in diesem Fall statt eines Winkels $\varphi$ zwei Komponenten $\varphi_x$ und $\varphi_y$, welche sich zu einem Vektor $\varphi$ zusammenfassen lassen. Die entsprechende vektorielle Erweiterung der Gleichungen (4), (5) im Fall einer paraxialen Näherung kann wie folgt dargestellt werden:

$$\Delta\varphi(\mathbf{r};\lambda) = \Delta\varphi_{\mathrm{ref}}(\mathbf{r};\lambda) + \Delta\varphi_{\mathrm{diff}}(\mathbf{r};\lambda) \qquad (4a)$$

wobei

$$\Delta\varphi_{\mathrm{ref}}(r;\lambda) = -(n(\lambda)-1)\alpha(r)$$
$$\Delta\varphi_{\mathrm{diff}}(r;\lambda) = \nabla_{\mathbf{r}}\Psi(\mathbf{r};\lambda) \qquad (5a)$$

Zur Definition des Farbsaums eines nicht rotationssymmetrischen Brillenglases kann die Gleichung (6) wie folgt modifiziert werden:

$$FS(\mathbf{r}) = \left| \Delta\varphi(\mathbf{r};\lambda_F) - \Delta\varphi(\mathbf{r};\lambda_C) \right| \qquad (6a)$$

Um den Farbsaum eines nicht rotationssymmetrischen optischen Elements, wie z.B. eines sphärozylindrischen Einstärkenglases oder eines Progressivglases, durch ein diffraktives Gitter ideal zu kompensieren, ist es im allgemeinen Fall erforderlich das Gitter individuell an den Wirkungsverlauf anzupassen. Dies kann beispielsweise durch eine simultane Optimierung von Brillenglasflächen und einem diffraktiven Gitter erfolgen. Jedoch erfordert eine solche simultane Optimierung einen großen Rechen- und Zeitaufwand. Es hat sich jedoch überaschenderweise herausgestellt, dass diffraktive Gitter, deren Gitterlinien den Linien konstanter Dicke des refraktiven optischen Elements oder den Linien des konstanten Betrags des Prismas des refraktiven optischen Elements folgen, oder senkrecht zu der lokalen Basislage des Prismas des refraktiven optischen Elements stehen, den Farbsaum eines beliebigen optischen Elements zufriedenstellend korrigieren bzw. reduzieren können. Hierzu wird ausgenutzt, dass der Farbsaum, der zu kompensieren ist, direkt durch den refraktiven Anteil des Prismas gegeben ist, und dass sich die Phasenfunktion direkt aus dem Verlauf der prismatischen Wirkung bzw. des Prismenwinkel konstruieren lässt.

Wie oben aufgezeigt wurde gelten für die gesamte prismatische Wirkung $\Delta\varphi(\mathbf{r};\lambda)$ als Funktion der Wellenlänge $\lambda$ und des Ortes $\mathbf{r}$ auf dem Brillenglas die Gleichungen 4a bis 6a. Dabei stellt die Phasenfunktion $\Psi(\mathbf{r};\lambda)$ die optische Pfadlängendifferenz (Optical Path Difference oder OPD), welche durch das diffraktive Gitter eingeführt wird, als Funktion des Ortes $\mathbf{r}$ auf dem Brillenglas und der Wellenlänge $\lambda$ dar.

Da nachfolgend Bezug auf die prismatische Wirkung genommen wird, kann ein Bezug zu den ebenso üblichen Bezeichnungsweisen durch

$$\begin{aligned}
\Delta\varphi_{\mathrm{ref}}(\mathbf{r};\lambda) &= \begin{pmatrix} \Delta\varphi_{\mathrm{ref},x}(\mathbf{r};\lambda) \\ \Delta\varphi_{\mathrm{ref},y}(\mathbf{r};\lambda) \end{pmatrix} \\
&= \mathbf{Pr}(\mathbf{r};\lambda) \\
&= \begin{pmatrix} \mathrm{Pr}0(\mathbf{r};\lambda) \\ \mathrm{Pr}90(\mathbf{r};\lambda) \end{pmatrix}
\end{aligned} \qquad (5b)$$

hergestellt werden.

Das Vektorfeld **Pr**(**r**;λ) fasst die prismatischen Wirkungen des Brillenglases in 0°-Richtung (Pr0(**r**;λ)) und 90°-Richtung (Pr90(**r**;λ)) zu einem Vektor zusammen (siehe Fig. 5).

Wie bereits oben dargelegt wurde, bedeutet eine Farbsaumkorrektur, dass

$$\frac{d}{d\lambda}\left(\Delta\varphi_{\text{ref}}(\mathbf{r};\lambda) + \Delta\varphi_{\text{diff}}(\mathbf{r};\lambda)\right) = 0 \qquad (16)$$

gelten muss. Ein Aspekt der Erfindung befasst sich mit der Aufgabe eine Phasenfunktion Ψ(**r**;λ) (und damit auch ein diffraktives Gitter) zu finden, durch die Gleichung (16) möglichst gut über das gesamte Brillenglas erfüllt ist.

Die Gleichung (16) lässt sich für Brillengläser mit bestimmten Verordnungswerten und Symmetrien gut erfüllen, indem ein passendes Gitter mit entsprechenden Symmetrien angegeben wird. Für asymmetrische Brillengläser passt ein symmetrisches Gitter aufgrund der fehlenden Symmetrie des Glases nicht mehr genau zu dem Glas, so dass die Gleichung (16) nicht mehr erfüllt wird.

Um ein Gitter aufzufinden, welches so gut wie möglich an die Asymmetrie eines Glases angepasst ist, ist es möglich, die Phasenfunktion Ψ(**r**;λ) mit Hilfe einer Zielfunktion über alle Blickrichtungen zu optimieren. Ein solches iteratives Verfahren ist jedoch sehr aufwändig.

Die vorliegende Erfindung basiert auf der Erkenntnis, dass auf Basis bestimmter Näherungen auch im allgemeinen Fall eines asymmetrischen Glases, ein diffraktives Gitter, welches den Farbsaum des Glases gut korrigiert, ohne großen Rechenaufwand bestimmt werden kann. Insbesondere basiert die Erfindung auf der Erkenntnis, dass der Farbsaum, welcher zu kompensieren ist, direkt durch den refraktiven Anteil des lokalen Prismas gegeben ist. Es wird daher vorgeschlagen, die Phasenfunktion Ψ(**r**;λ) direkt aus dem Verlauf von **Pr**(**r**;λ) bzw. α(**r**) zu konstruieren oder herzuleiten.

Aus Gleichung (16) folgt, dass

$$\frac{d}{d\lambda}\left(-(n(\lambda)-1)\boldsymbol{\alpha}(\mathbf{r}) + \nabla_{\mathbf{r}}\Psi_\lambda(\mathbf{r};\lambda)\right) = 0$$

$$-\partial n/\partial\lambda\,\boldsymbol{\alpha}(\mathbf{r}) + \nabla_{\mathbf{r}}\Psi_\lambda(\mathbf{r};\lambda) = 0 \qquad (16a)$$

mit Ψλ(**r**;λ):=∂/∂λΨ(**r**;λ)=Ψ(**r**;λ)/λ ist. Als allgemeines Resultat erhält man

$$\nabla_{\mathbf{r}}\Psi(\mathbf{r};\lambda) = \lambda\,\partial n/\partial\lambda\,\boldsymbol{\alpha}(\mathbf{r}) \qquad (16b)$$

**Fig. 5** zeigt die Gitterlinien des diffraktiven Gitters, welche den Isolinien (24) der Glasdicke folgen und das Vektorfeld (22) der prismatischen Wirkung **Pr**(**r**;λ) für ein Brillenglas.

**Beispiel 1: Bestimmen des diffraktiven Gitters auf Basis der Brillenglasdicke**

In paraxialer Näherung hängt der Prismenkeilwinkel α(**r**) mit den Ableitungen der Pfeilhöhe durch

$$\boldsymbol{\alpha}(\mathbf{r}) = \begin{pmatrix} \alpha_x(\mathbf{r}) \\ \alpha_y(\mathbf{r}) \end{pmatrix} = \begin{pmatrix} \partial/\partial x\,\Delta z(\mathbf{r}) \\ \partial/\partial y\,\Delta z(\mathbf{r}) \end{pmatrix}$$

$$= \nabla_{\mathbf{r}} z(\mathbf{r}) \qquad (17)$$

zusammen, wobei Δz(**r**)=z2(**r**)-z1(**r**) die Differenz der Pfeilhöhen von Rück- und Vorderfläche ist. In diesem Fall gilt nach Gleichung (16):

$$\nabla_{\mathbf{r}}\Psi(\mathbf{r};\lambda) = \lambda \cdot \partial n / \partial \lambda \, \nabla_{\mathbf{r}}\Delta z(\mathbf{r})$$

$$= \frac{1}{\nu_d} \cdot \frac{\lambda}{\lambda_F - \lambda_C} \nabla_{\mathbf{r}}\Delta z(\mathbf{r}) \qquad (18)$$

Gleichung (18) stellt eine Differentialgleichung zur Bestimmung der Phase $\Psi(\mathbf{r};\lambda)$ dar, durch die das Gitter festgelegt wird. Eine mögliche Lösung von Gleichung (18) ist

$$\Psi(\mathbf{r};\lambda) = \frac{1}{\nu_d} \cdot \frac{\lambda}{\lambda_F - \lambda_C} \Delta z(\mathbf{r}) \qquad (19)$$

d.h. die Phase $\Psi(\mathbf{r};\lambda)$ ist proportional zur Brillenglasdicke.

Die Gitterlinien des diffraktiven Gitters verlaufen - wie nachfolgend dargelegt wird - parallel zu den Isolinien der Phasenfunktion $\Psi(\mathbf{r};\lambda)$. Somit verlaufen die Gitterlinien des diffraktiven Gitters vorzugsweise im Wesentlichen parallel zu den Isolinien der Brillenglasdicke. Anders ausgedrückt folgen die Gitterlienen des diffraktiven Gittern den Linien konstanter Brillenglasdicke.

Anstatt der Dicke, welche durch die Differenz $\Delta z(\mathbf{r})=z_2(\mathbf{r})-z_1(\mathbf{r})$ gegeben ist, kann in Gleichung (19) auch die schiefe Dicke verwendet werden, welche sich beim Lichtdurchgang durch das Brillenglas in Gebrauchsstellung ergibt. Alternativ kann auch diejenige schiefe Dicke verwendet werden, die sich beim Lichtdurchgang durch das Brillenglas im Strahlengang einer vorgegebenen Messstellung z.B. der Scheitelmessstellung ergibt. Schließlich kann auch diejenige schiefe Dicke verwendet werden, die sich beim Lichtdurchgang durch das Brillenglas in einem anderen Strahlengang ergibt (siehe Fig. 5).

**Beispiel 2: Bestimmen des diffraktiven Gitters auf Basis des Prismas**

In einem alternativen Beispiel kann die diffraktive Phase auch anhand des Verlaufs des vektoriellen Prismas konstruiert bzw. ermittelt werden. Da die Isolinien der Brillenglasdicke paraxial (d.h. in paraxialler Näherung) senkrecht zum Vektorfeld $\alpha(\mathbf{r})$ verlaufen und da die Gitterlinien entlang der Isolinien der Brillenglasdicke verlaufen sollen, ist es möglich eine alternative Konstruktion dadurch anzugeben, dass die Gitterlinien senkrecht zum Vektorfeld $\alpha(\mathbf{r})$ verlaufen sollen. Das Vektorfeld $\alpha(\mathbf{r})$ ist nach Gleichung (5b) oder (5b) proportional ist zum Vektorfeld $\mathbf{Pr}(\mathbf{r};\lambda)$, das die prismatischen Wirkungen des Brillenglases in 0°-Richtung und 90°-Richtung zu einem Vektor zusammenfasst (siehe Fig. 5).

Bei einem rotationssymmetrischen Brillenglas verlaufen die Gitterlinien vorzugsweise parallel zu den Isolinien des Betrags des Prismas. Dies muss bei asymmetrischen Brillengläsern jedoch nicht notwendigerweise der Fall sein.

Zur Konstruktion der entsprechenden Gitterphase $\Psi(\mathbf{r};\lambda)$ (d.h. Phasenfunktion) kann direkt auf die Gleichung (16b) zurückgegriffen werden. Da die Phasenfunktion nur bis auf eine additive Konstante angegeben werden muss, kann ein Startwert $\Psi(\mathbf{r}_0;\lambda)$ an einer willkürlichen Stelle $\mathbf{r}_0$ vorgeben werden. Die Gleichung (16b) kann dann verwendet werden, um durch Integration des Vektorfeldes

$$\Psi(\mathbf{r};\lambda) = \Psi(\mathbf{r}_0;\lambda) + \int_{\mathbf{r}_0}^{\mathbf{r}} \nabla_{\mathbf{r}}\Psi(\mathbf{r}';\lambda)d\mathbf{r}'$$

$$= \Psi(\mathbf{r}_0;\lambda) + \lambda\,\partial n / \partial \lambda \int_{\mathbf{r}_0}^{\mathbf{r}} \alpha(\mathbf{r}')d\mathbf{r}' \qquad (20)$$

die Phasenfunktion zu konstruieren, wobei $\mathbf{r}'(\mathbf{r},\mathbf{r}_0;t)$ in

$$\int_{\mathbf{r}_0}^{\mathbf{r}} \boldsymbol{\alpha}(\mathbf{r}')d\mathbf{r}' = \int_0^1 \boldsymbol{\alpha}(\mathbf{r}'(\mathbf{r},\mathbf{r}_0;t)) \frac{\partial \mathbf{r}'(\mathbf{r},\mathbf{r}_0;t)}{\partial t} dt \qquad (21)$$

die Parametrisierung der Bahnkurve $C(\mathbf{r}_0,\mathbf{r})$ von $\mathbf{r}_0$ nach $\mathbf{r}$ ist, entlang der das Integral zu bilden ist.

Falls das Vektorfeld $\alpha(\mathbf{r})$ integrierbar ist (d.h. selbst Gradientenfeld einer skalaren Funktion von $\mathbf{r}$ ist), ist das Integral in Gleichung (21) unabhängig von der Kurve $C(\mathbf{r}_0,\mathbf{r})$. Die Isolinien von $\Psi(\mathbf{r};\lambda)$ stehen dann exakt senkrecht auf dem Vektorfeld $\alpha(\mathbf{r})$, was z.B. in der paraxialen Näherung der Fall ist.

Falls aber das Vektorfeld $\alpha(\mathbf{r})$ nicht integrierbar ist (also nicht rotationsfrei ist), hängt das Ergebnis der Integration von der Kurve $C(\mathbf{r}_0,\mathbf{r})$ ab. Das Verfahren ist erst eindeutig zusammen mit einer eindeutigen Angabe der Kurve $C(\mathbf{r}_0,\mathbf{r})$ für jedes Punktepaar $\mathbf{r}_0$, $\mathbf{r}$, also einer Angabe der Funktion $\mathbf{r}'(\mathbf{r},\mathbf{r}_0;t)$. Bevorzugt als Kurve ist die direkte Verbindung

$$\mathbf{r}'(\mathbf{r},\mathbf{r}_0;t) = \mathbf{r}_0 + (\mathbf{r} - \mathbf{r}_0)t . \qquad (22)$$

Jede andere Funktion kann jedoch ebenfalls gewählt werden. Als Ergebnis wird eine Phasenfunktion $\Psi(\mathbf{r};\lambda)$ erhalten, welche (nur) näherungsweise senkrecht auf dem Vektorfeld $\alpha(\mathbf{r})$ steht.

Grundlage für das Verfahren gemäß dem alternativen Beispiel der Erfindung ist das Vektorfeld $\mathbf{Pr}(\mathbf{r};\lambda)$ des Prismas.

In den obigen Beispielen wurde das flächenhaft bestimmte Prisma $\mathbf{Pr}(\mathbf{r};\lambda)$ (d.h. das Prisma $\mathbf{Pr}(\mathbf{r};\lambda)$ nach Flächenwerten) berücksichtigt. Alternativ ist es jedoch möglich, das Prisma in Gebrauchsstellung, das Prisma in Scheitelmessstellung, oder das Prisma in jeder anderen geeigneten Messstellung als Grundlage heranzuziehen.

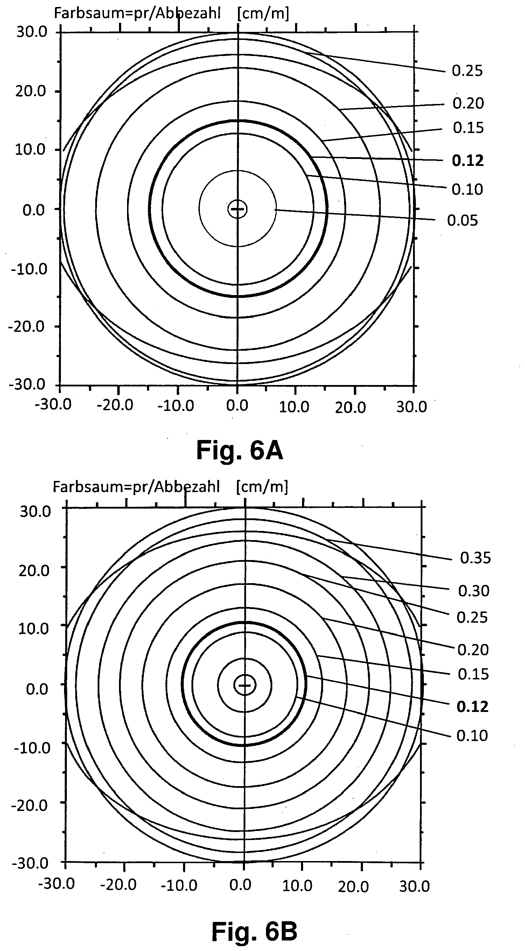

**Fig. 6A, 6B** zeigen den Farbsaum (in Form eines Isolinienplotts) eines unkorrigierten rotationssymmetrischen Einstärkenglas mit einer sphärischen Wirkung (Sph) von - 4,0 dpt, wobei die Glaseigenschaften als Funktion von Brillenglaskoordinaten in mm angegeben sind. Fig. 6A zeigt den Farbsaum eines herkömmlichen unkorrigierten Einstärkenglases aus dem optischen Material Perfalit 1,5 mit einem Brechungsindex 1,5 und einer Abbezahl von 58,5. Fig. 6B zeigt den Farbsaum eines herkömmlichen Einstärkenglases aus dem optischen Material Perfalit 1,6 mit einem Brechungsindex 1,6 und mit einer Abbezahl von 40,5. Da der Farbsaum proportional zu der prismatischen Wirkung des Glases geteilt durch die Abbezahl ist, verlaufen die Isolinien der prismatischen Wirkung parallel zu den Isolinien des Farbsaums. Die Gitterlinien eines für dieses Glas bestimmten diffraktiven Gitters können im Wesentlichen parallel zu den gezeigten Isolinien des Farbsaums bzw. Isolinien der prismatischen Wirkung verlaufen. Mit Hilfe eines solchen diffraktiven Gitters ist es möglich, den Farbsaum des Brillenglases im Wesentlichen im gesamten Bereich unter eine Wahrnehmungsschwelle von z.B. 0,12 cm/m zu reduzieren.

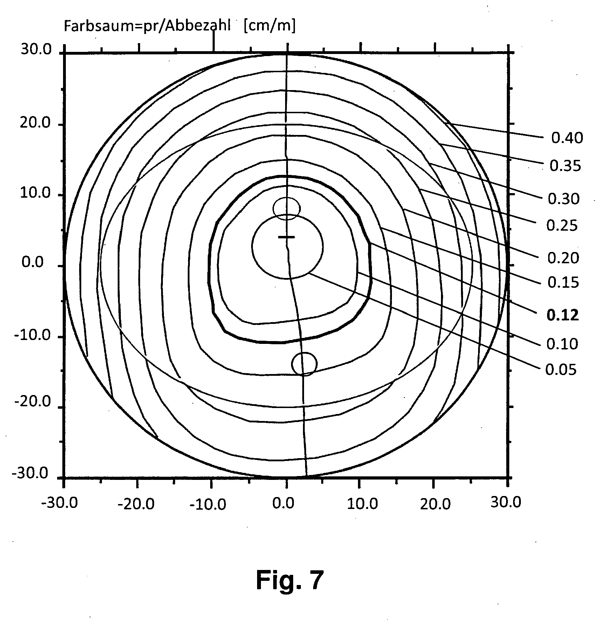

**Fig. 7** zeigt den Farbsaum des unkorrigierten progressiven Brillenglases, welches eine sphärische Wirkung im Fernbezugspunkt (Sph) von -4,0 dpt und eine Addition von 2,5 dpt aufweist. Der Brechungsindex des optischen Materials des Brillenglases ist $n=1,668$ und die Abbezahl $v_d=31,81$. Wie aus Fig. 7 ersichtlich sind die Isolinien des Farbsaums und somit der Isolinien der prismatischen Wirkung geschlossene, asymmetrische Kurven. Die Gitterlinien eines für dieses Glas bestimmten diffraktiven Gitters können im Wesentlichen parallel zu den gezeigten Isolinien des Farbsaums bzw. Isolinien der prismatischen Wirkung verlaufen. Somit ist es möglich, in einem großen, zentralen Bereich des Brillenglases, welcher relevant für das Sehen ist, den Farbsaum unter eine Wahrnehmungsschwelle von z.B. 0,12 cm/m zu reduzieren. Lediglich in der Peripherie des progressiven Brillenglases kann ein höherer Farbsaum auftreten. Vorzugsweise tritt jedoch auch in der Peripherie des Brillenglases lediglich ein Farbsaum auf, der unter der gewählten Wahrnehmungsschwelle liegt.

Nachfolgend wird die Beschreibung eines beliebigen diffraktiven Gitters auf eine beliebig gekrümmte Fläche mittels einer Phasenfunktion $\Psi(\overline{x},\overline{y})=\Psi(\overline{x},\overline{y},m,\lambda)$ bzw. $\Psi(\mathbf{r};\lambda)$ im Detail erläutert.

Im einfachsten Fall einer refraktiven, homogenen Grenzfläche zwischen zwei Medien mit den Brechungsindizes $n$ und $n'$ ohne diffraktive optische Elemente bzw. diffraktive Gitter wird die Strahlablenkung durch das Brechungsgesetz $n'\sin\varphi'-n\sin\varphi=0$, wobei $\varphi$ der Einfallswinkel und $\varphi'$ der Ausfallswinkel ist, beschrieben.

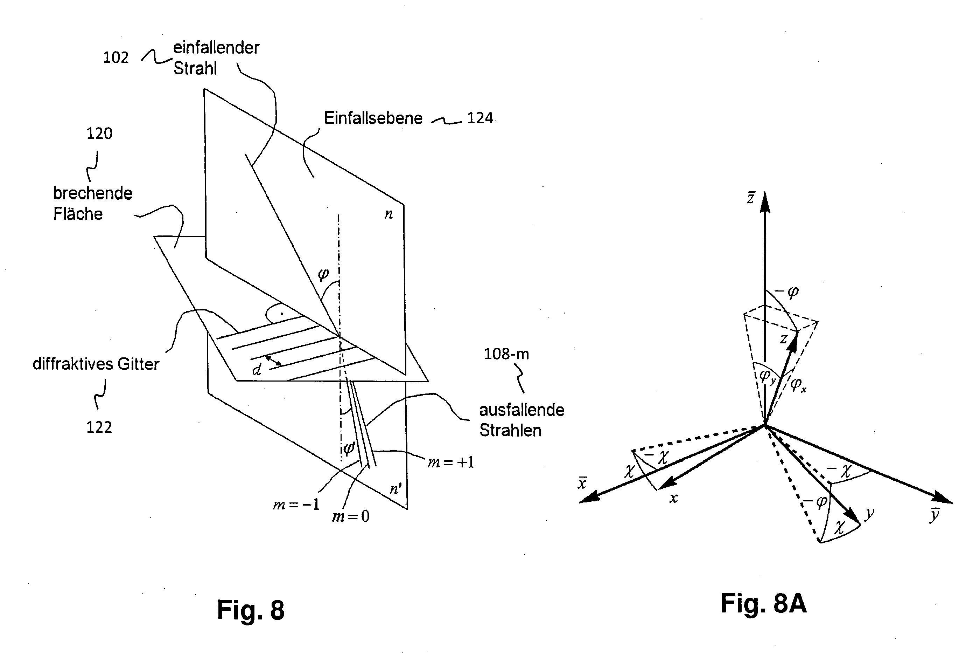

**Fig. 8** illustriert schematisch den Strahlengang bei Beugung an einer Grenzfläche 120 mit einem diffraktiven Gitter 122 in einem speziellen einfachen Fall, in welchem es möglich ist, die Strahlablenkung durch ein geschlossenes Gesetz zu beschreiben. Dieses Gesetz lässt sich als eine Modifikation dieses Brechungsgesetzes auffassen. Dieser Fall ist dadurch gekennzeichnet, dass die brechende Fläche 120 eine Ebene ist und das diffraktive Gitter 122 eine Unregelmäßigkeit dieser Fläche 120 ist, welche senkrecht zur Einfallsebene 124 translationsinvariant ist und in Richtung der Brechungsebene (die Ebene der brechenden Fläche 120) äquidistant mit Periode $d$ ist (siehe Fig. 8). Die Unregelmäßigkeit kann z.B. ein Sägezahngitter sein, ein Rechteckgitter, ein Wechsel von lichtdurchlässigen und lichtundurchlässigen Zonen oder jede andere periodische Abweichung von der homogenen, ebenen, lichtdurchlässigen, brechenden Fläche. In diesem einfachen Fall wird ein einfallender monochromatischer Strahl 102, welcher zu Licht mit der Wellenlänge $\lambda$ gehört, durch Beugung in viele Einzelstrahlen 108-m, welche zu den verschiedenen Beugungsordnungen $m$, $m$=...,-2,-1,0,1,2,... gehören, aufgespalten. Die Beugungsordnung $m$ kann beliebig aber fest gewählt werden und nachfolgend kann die Situation für den einen Strahl zur Beugungsordnung $m$ isoliert, d.h. ungeachtet der möglichen anderen Beugungsordnungen, beschrieben werden. Für einen Strahl zur Beugungsordnung $m$ gilt dann das modifizierte Brechungsgesetz $n'\sin\varphi'-n\sin\varphi=m\lambda/d$, wobei $n$ und $n'$ jeweils den Brechungsindex des Materials vor und nach der Grenzfläche 120 bezeichnen und $\varphi$ der Einfallswinkel und $\varphi'$ der Ausfallswinkel ist.

## Koordinatensysteme

Um eine Grenzfläche mit zumindest einem diffraktiven Gitter möglichst allgemein zu beschreiben, können - in Analogie zum Fall rein refraktiver Flächen - grundsätzlich zwei Arten von Koordinaten bzw. Koordinatensystemen verwendet werden.

Die eine Art sind globale Koordinaten $\bar{x}^0,\bar{y}^0,\bar{z}^0$, welche dazu dienen, die Grundfläche (d.h. die rein refraktive Fläche ohne das diffraktive Gitter durch ihre Pfeilhöhe $\bar{z}^0(\bar{x}^0,\bar{y}^0)$ zu beschreiben. Hierbei wird die gegebenenfalls vorhandene Pfeilhöhe des diffraktiven Gitters nicht zur Pfeilhöhe der Grundfläche hinzugerechnet. Stattdessen wird das diffraktive Gitter selbst durch eine separate Eigenschaft $h(\bar{x}^0,\bar{y}^0)$ beschrieben. Hierbei kann $h(\bar{x}^0,\bar{y}^0)$ die Rolle einer zusätzlichen Pfeilhöhe spielen, so dass die wahre (mikroskopische) physikalische Pfeilhöhe der Grenzfläche durch

$$\bar{z}_{\mathrm{m}}^0(\bar{x}^0,\bar{y}^0) = \bar{z}^0(\bar{x}^0,\bar{y}^0) + h(\bar{x}^0,\bar{y}^0)$$

gegeben ist. Es ist jedoch möglich, dass $h(\bar{x}^0,\bar{y}^0)$ die Rolle einer Transmissionseigenschaft oder einer sonstigen Eigenschaft des POE spielt.

Die andere Art von Koordinaten sind - wie oben beschrieben - lokale Koordinaten $\bar{x},\bar{y},\bar{z}$, welche dazu dienen, den Hindurchtritt eines Strahls durch die Grenzfläche so zu beschreiben, dass am Durchstoßpunkt $(\bar{x},\bar{y},\bar{z})$=(0,0,0) gilt, und dass die $\bar{z}$-Achse dort senkrecht zur Grundfläche steht. Eine spezielle mögliche Wahl eines solchen lokalen Systems besteht darin zu fordern, dass der einfallende Strahl in beispielsweise der $\bar{x}$-$\bar{z}$-Ebene oder der $\bar{y}$-$\bar{z}$-Ebene liegt. Im Allgemeinen muss jedoch diese Bedingung nicht notwendigerweise erfüllt sein. Die Verwendung von lokalen Systemen ist z.B. aus WO 2008/089999 A1 bekannt und wird z.B. bei der Wellenfrontdurchrechnung 2.Ordnung durch Flächen ohne diffraktives Gitter verwendet. Typischerweise wird nur ein globales Koordinatensystem, aber so viele lokale Systeme wie Strahlen gerechnet werden sollen, verwendet.

**Fig. 8A** stellt die Lage des Koordinatensystems $x,y,z$ der einfallenden Wellenfront bezüglich des Koordinatensystems $\bar{x},\bar{y},\bar{z}$ der brechenden Fläche (Grundfläche) dar, ausgedrückt durch die Winkel $\varphi_x$, $\varphi_y$, $\varphi$ und $\chi$.

In Fig. 8A sind der Einfachheit halber lediglich das Koordinatensystem der einfallenden Wellenfront und das Koordinatensystem der brechenden Fläche gezeigt. Das Koordinatensystem $x',y',z'$ der ausfallenden Wellenfront kann analog zu dem Koordinatensystem der einfallenden Wellenfront vorgegeben werden. Des Weiteren wird auf Fig. 1 in der Publikation [G. Esser, W. Becken, W. Müller, P. Baumbach, J. Arasa, und D. Uttenweiler, "Derivation of the refraction equations for higher-order aberrations of local wavefronts at oblique incidence", JOSA. A, Vol. 27, Nr. 2, Februar 2010, Seiten 218 - 237] verweisen, welche eine zweidimensionale Darstellung der entsprechenden gegenseitigen Lage für alle drei Koordinatensysteme zeigt.

## Beschreibung eines diffraktiven Gitters durch die Phasenfunktion $\Psi(\bar{x},\bar{y})$

Die Phasenfunktion $\Psi(\bar{x},\bar{y})$ stellt die optische Pfadlängendifferenz (Optical Path Difference oder OPD), welche durch das diffraktive Gitter eingeführt wird, als Funktion der Koordinaten $\bar{x},\bar{y}$ tangential zur brechenden Fläche dar. Die Phasenfunktion $\Psi(\bar{x},\bar{y})$ kann anhand der Gitterlinien bestimmt werden. Umgekehrt ist es möglich, bei einer vorgegebenen Phasenfunktion die Gitterlinien des entsprechenden diffraktiven Gitters zu bestimmen.

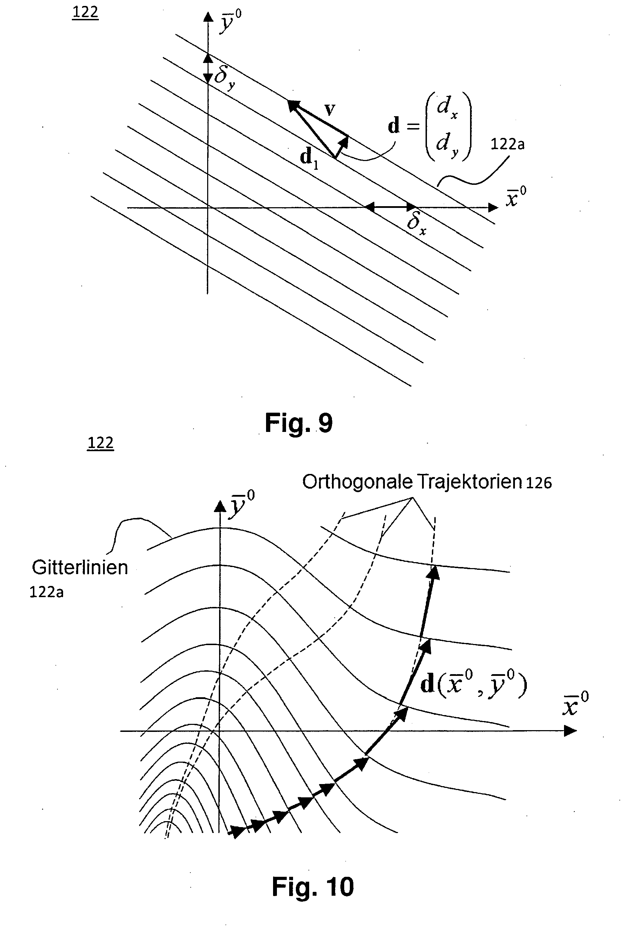

Im einfachsten Fall eines konstanten, äquidistanten diffraktiven Gitters 122 auf einer ebenen Fläche 120 (siehe z.B. **Fig. 8** und **Fig. 9**), die in globalen Koordinaten durch $\bar{z}^0(\bar{x}^0,\bar{y}^0)=a_x\bar{x}^0+a_y\bar{y}^0+t$ beschrieben wird, kann zwischen einem einfachperiodischen und einem doppelt-periodischen Gitter unterschieden werden.

Beim einfach-periodischen Gittern gibt es einen Periodenvektor $\mathbf{d}_1$, so dass für alle

Punkte $\overline{\mathbf{r}}^0 = \left(\overline{x}^0, \overline{y}^0\right)$

$$h(\overline{\mathbf{r}}^0 + \mathbf{d}_1) = h(\overline{\mathbf{r}}^0) \tag{106a}$$

gilt. Ferner gibt es eine Richtung mit Translationsinvarianz, d.h. einen Vektor v mit

$$h(\overline{\mathbf{r}}^0 + \alpha\mathbf{v}) = h(\overline{\mathbf{r}}^0) \tag{106b}$$

für alle $\alpha$.

In einem solchen Fall zeigen die Gitterlinien 112a in die Richtung von **v**, dagegen muss $\mathbf{d}_1$ nicht unbedingt den Abstand zwischen den Gitterlinien 122a beschreiben, weil $\mathbf{d}_1$ nicht notwendigerweise senkrecht auf v stehen muss. In einem solchen Fall kann der Vektor $\mathbf{d}_1$ durch den Vektor mit den Komponenten $\mathbf{d} = \begin{pmatrix} d_x \\ d_y \end{pmatrix}$ ersetzt werden, welcher durch

$$\mathbf{d} = \mathbf{d}_1 - (\mathbf{d}_1 \cdot \mathbf{v})\mathbf{v}. \tag{107}$$

definiert ist.

Dieser Vektor **d** steht senkrecht auf **v** und es gilt ferner

$$\begin{aligned} h(\overline{\mathbf{r}}^0 + \mathbf{d}) &= h\left(\overline{\mathbf{r}}^0 + \mathbf{d}_1 - (\mathbf{d}_1 \cdot \mathbf{v})\mathbf{v}\right) \\ &= h\left(\overline{\mathbf{r}}^0 + \mathbf{d}_1 - \alpha\mathbf{v}\right) \\ &= h\left(\overline{\mathbf{r}}^0 + \mathbf{d}_1\right) \\ &= h\left(\overline{\mathbf{r}}^0\right) \end{aligned} \tag{108}$$

so dass auch der Vektor **d** ein Periodenvektor ist. Der Vektor **d** gibt jedoch im Gegensatz zu $\mathbf{d}_1$ auch den Abstand zwischen zwei Gitterlinien an (siehe **Fig. 9**). Die Gitterperiode ist dann durch den Betrag $d = |\mathbf{d}|$ gegeben.

Bei einem einfach-periodischen Gitter 122, wie z.B. in Fig. 9 gezeigt, existieren ferner noch zwei weitere Periodenvektoren von praktischer Bedeutung. Diese hängen vom Koordinatensystem ab und sind durch die Vektoren

$$\boldsymbol{\delta}_x = \begin{pmatrix} \delta_x \\ 0 \end{pmatrix}, \quad \boldsymbol{\delta}_y = \begin{pmatrix} 0 \\ \delta_y \end{pmatrix}, \tag{109}$$

die in Richtung der Koordinatenachsen zeigen, gegeben (siehe Fig. 9). Der Zusammenhang zwischen d und den Vektoren $\delta_x, \delta_y$ ist durch

$$\delta_x = \frac{|\mathbf{d}|^2}{d_x}, \quad \delta_y = \frac{|\mathbf{d}|^2}{d_y}, \tag{110a}$$

sowie

$$d_x = \frac{\delta_x \delta_y^2}{\delta_x^2 + \delta_y^2}, \quad d_y = \frac{\delta_y \delta_x^2}{\delta_x^2 + \delta_y^2}, \tag{110b}$$

gegeben.

Bei einem doppelt-periodischen Gitter 122 - existieren zwei Periodenvektoren $\mathbf{d}_1, \mathbf{d}_2$ mit

$$h(\overline{\mathbf{r}}^0 + \mathbf{d}_1) = h(\overline{\mathbf{r}}_S)$$
$$h(\overline{\mathbf{r}}^0 + \mathbf{d}_2) = h(\overline{\mathbf{r}}_S) \tag{111}$$

Doppelt-periodisch in diesem Sinne bedeutet, dass es in keiner Richtung eine Translationsinvarianz gibt, d.h. es gibt keinen Vektor $\mathbf{v}$ mit $h(\overline{r}^0 + \alpha\mathbf{v}) = h(\overline{r}_S)$ für alle $\alpha$.

Aus Betrachtungen der Wellenoptik ergibt sich, dass eine ebene monochromatische Welle der Wellenlänge $\lambda$, die schräg auf ein einfach- oder doppelt-periodisches Gitter fällt, auf der ausfallenden Seite durch Interferenz zu einer richtungsabhängigen Intensitätsverteilung führt. Diese Verteilung lässt sich als Produkt aus zwei richtungsabhängigen Faktoren darstellen, wobei der eine Faktor (der Formfaktor) nur durch die Form des diffraktiven Gitters innerhalb einer Gitterperiode bestimmt wird und der zweite Faktor (der Gitter- bzw. Beugungsfaktor) nur durch die Gitterperiodizität bestimmt wird. Der zweite Faktor nimmt ein Maximum in jeder einer solchen Richtung an, in der der Gangunterschied zwischen zwei Stellen des Wellenfeldes auf der Grenzfläche, die um eine Gitterperiode versetzt liegen, ein ganzzahliges Vielfaches der Wellenlänge des Lichts auf der ausfallenden Seite beträgt.

Wird im Bild der geometrischen Strahlenoptik dem einfallenden Wellenfeld der Richtungsvektor

$$\mathbf{N} = \begin{pmatrix} \sin\varphi_x \\ \sin\varphi_y \\ \sqrt{1 - \sin^2\varphi_x - \sin^2\varphi_y} \end{pmatrix} \tag{112a}$$

zugeordnet und auf der ausfallenden Seite einer jeder Richtung, in der ein Maximum des Gitterfaktors liegt, ein Richtungsvektor der Form

$$\mathbf{N}' = \begin{pmatrix} \sin\varphi'_x \\ \sin\varphi'_y \\ \sqrt{1 - \sin^2\varphi'_x - \sin^2\varphi'_y} \end{pmatrix}, \tag{112b}$$

zugeordnet, dann werden die Strahlen durch die Gesetze

$$n'\sin\varphi'_x - n\sin\varphi_x = \frac{m_x\lambda}{\delta_x}$$

$$n'\sin\varphi'_y - n\sin\varphi_y = \frac{m_y\lambda}{\delta_y}$$

$$(113)$$

beschrieben, wobei $m_x$=..., -3, -2, -1, 0, 1, 2, 3, ... und $m_y$=..., -3, -2, -1, 0, 1, 2, 3, ... ganze Zahlen sind. Die Gesetze (113) können als die erweiterten Brechungsgesetze bei Anwesenheit eines diffraktiven Gitters betrachtet werden. Insbesondere beschreibt der Fall $m_x$=0, $m_y$=0, d.h. die nullte Beugungsordnung, die Situation ohne diffraktive Elemente.

Bei einem doppelt-periodischen diffraktiven Element kommen alle ganzen Zahlen $m_x,m_y$ unabhängig voneinander vor, bei einem einfach-periodischen Gitter nur betragsgleiche Beugungsordnungen $m_x=\sigma m_y$, wobei $\sigma$=+1 für den Fall gilt, dass die Gitterlinien für zunehmende Werte von $\overline{x}^0$ fallen (wie in **Fig. 9**, $\partial\overline{y}^0/\partial\overline{x}^0$<0), und $\sigma$=-1 für den Fall steigender Gitterlinien gilt ($\partial\overline{y}^0/\partial\overline{x}^0$> 0).

Nachfolgend werden einfach-periodische, diffraktive Gitter ($m:=m_x=\sigma\cdot m_y$) betrachtet. Alle Berechnungen können jedoch ebenfalls für den Fall von doppelt-periodischen diffraktiven Gittern entsprechend modifiziert werden.

Die Gleichung (113) mit $m:=m_x=\sigma\cdot m_y$ auf der rechten Seite lässt sich so interpretieren, dass zwei Strahlen, die an zwei benachbarten Gitterlinien gebrochen werden, einen nichtverschwindenden Gangunterschied besitzen, d.h. eine Phasendifferenz, die proportional zu $m$ und proportional zu $\lambda$ ist. Somit gibt es zwei Möglichkeiten, den Verlauf der Gitterlinien zu charakterisieren, nämlich zum einen durch die (z.B. mit einem Mikroskop) messbaren, auf dem Vektor **d** basierenden Gittereigenschaften, und zum anderen durch die abstrakte Eigenschaft in den Strahlengang einen zusätzlichen ortsabhängigen Gangunterschied einzuführen. Im zweiten Fall wird der Verlauf der Gitterlinien durch die Differenz zwischen den Werten einer Phasenfunktion $\Psi^0(\overline{x}^0,\overline{y}^0;\lambda,m)$ bestimmt, welche außer von den Koordinaten $\overline{x}^0,\overline{y}^0$ auch noch von der Wellenlänge $\lambda$ und der Beugungsordnung $m$ abhängt. Da diese Phasenfunktion in jedem Fall proportional zu $\lambda$ und $m$ ist, können diese Faktoren abgespalten werden. Statt der Phasenfunktion $\Psi^0(\overline{x}^0,\overline{y}^0;\lambda,m)$ kann die Phasenfunktion $\Psi^0(\overline{x}^0,\overline{y}^0)$ verwendet werden, wobei

$$\Psi^0(\overline{x}^0,\overline{y}^0;\lambda,m) = m\lambda\cdot\psi^0(\overline{x}^0,\overline{y}^0)$$

$$(114)$$

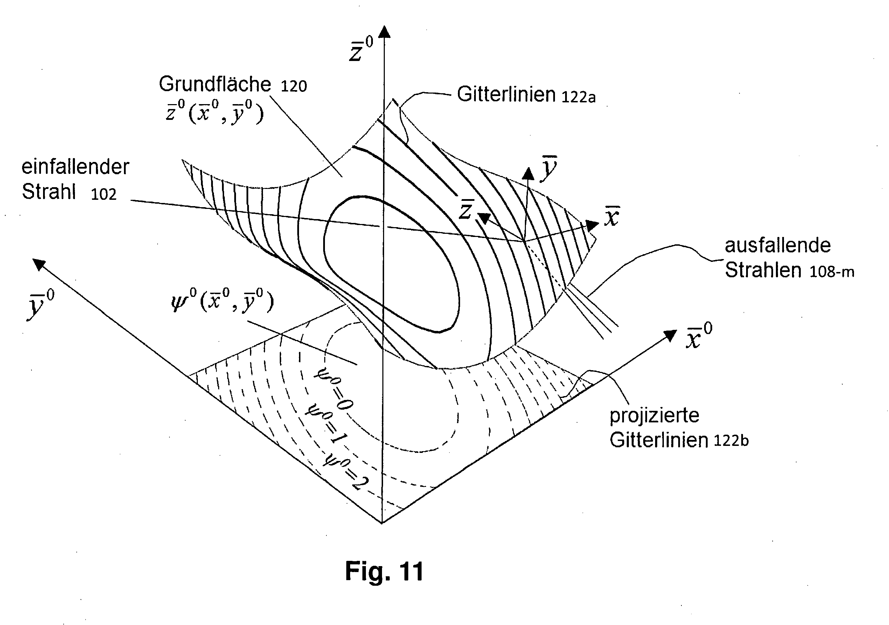

Fig. 10 zeigt Gitterlinien eines diffraktiven Gitters 122 auf einer ebenen Grenzfläche 120 und Fig. 11 zeigt Gitterlinien eines diffraktiven Gitters 122 auf einer gekrümmten Grenzfläche 122.

Außer im einfachsten Fall eines konstanten, äquidistanten Gittes auf einer ebenen Fläche verlaufen im allgemeinen Fall die Gitterlinien an jeder Stelle eines optischen Elements in einer anderen Richtung, wie z.B. in **Fig. 10** und **Fig. 11** gezeigt. Darüber hinaus ist im Allgemeinen ihr Abstand an jeder Stelle verschieden (siehe z.B. **Fig. 10**). Eine strenge Periodizität liegt dann im Grunde nicht mehr vor. Der Periodenvektor **d** kann folglich nicht mehr definiert werden. Es wird daher vorgeschlagen, den Periodenvektor **d** durch eine koordinatenabhängige Funktion $\mathbf{d}(\overline{x}^0,\overline{y}^0)$ oder anders ausgedrückt durch ein Vektorfeld $\mathbf{d}(\overline{x}^0,\overline{y}^0)$ zu ersetzen, welches als das Tangentialvektorfeld zu den Trajektorien 126, die orthogonal auf den Gitterlinien 122a stehen, definiert ist.

Zusätzlich muss im allgemeinen Fall einer gekrümmten Grundfläche 120, wie in **Fig. 11** gezeigt, berücksichtigt werden, dass das Gitter 122 zwar einerseits in globalen Koordinaten $\overline{x}^0,\overline{y}^0$ spezifiziert ist, andererseits jedoch für die Auswirkung auf den Strahldurchgang lokale Eigenschaften relevant sind, wie z.B. der lokale Gitterabstand, den das Gitter 122 entlang der verkippten Achsen eines lokalen Koordinatensystems $\overline{x},\overline{y}$ aufweist.

Anstelle von $\mathbf{d}(\overline{x}^0,\overline{y}^0)$ lässt sich die Auswirkung des Gitters 122 auch in diesem allgemeinen Fall durch die Phasenfunktion $\Psi^0(\overline{x}^0,\overline{y}^0)$ beschreiben.

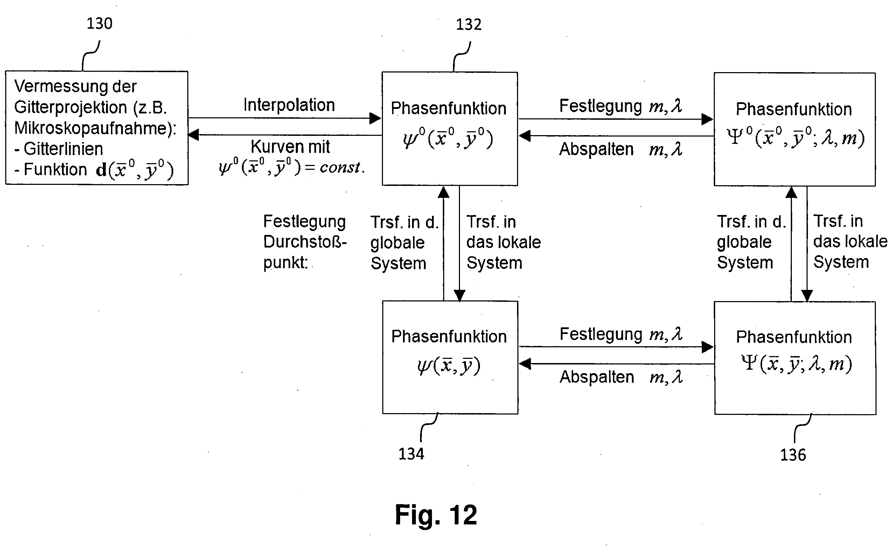

Die Phasenfunktion eines diffraktiven Gitters $\Psi^0(\overline{x}^0,\overline{y}^0)$ ist zur Wellenfrontdurchrechnung geeigneter als das Vektorfeld $\mathbf{d}(\overline{x}^0,\overline{y}^0)$, jedoch ist sie nicht unmittelbar messbar. Um eine auf der Phasenfunktion $\psi^0(\overline{x}^0,\overline{y}^0)$ basierende Wellenfrontrechnung durchzuführen, wird daher ein Verfahren zum Bestimmen des Übergangs zwischen den Funktionen $\mathbf{d}(\overline{x}^0,\overline{y}^0)$ und $\psi^0(\overline{x}^0,\overline{y}^0)$ in beiden Richtungen (d.h. $\mathbf{d}(\overline{x}^0,\overline{y}^0)\leftrightarrow\psi^0(\overline{x}^0,\overline{y}^0)$) vorgeschlagen. Das in **Fig. 12** gezeigte Ablaufschema illustriert den Übergang zwischen dem Vektorfeld $\mathbf{d}(\overline{x}^0,\overline{y}^0)$ und der Phasenfunktion $\psi^0(\overline{x}^0,\overline{y}^0)$.

Insbesondere kann bei vorgegebenem Gitter, welches z.B. durch eine Vermessung (siehe Block 130 in Fig. 12) der Mikroskopaufnahme einer Gitterprojektion oder durch eine Projektion einer anderen messbaren Eigenschaft des Gitters (z.B. einer Transmissionseigenschaft) bekannt sein kann, die Phasenfunktion $\psi^0(\overline{x}^0,\overline{y}^0)$ im globalen Koordi-

natensystem dadurch erhalten werden (siehe Block 132 in Fig. 12), dass die Gitterlinien durchgezählt und als Kurven $\psi^0(\overline{x}^0,\overline{y}^0)$=const. aufgefasst werden. Für die Kurven werden nacheinander die Werte $\psi^0(\overline{x}^0,\overline{y}^0)$=0, $\psi^0(\overline{x}^0,\overline{y}^0)$=1, $\psi^0(\overline{x}^0,\overline{y}^0)$=2, etc., angenommen (siehe **Fig. 12**). Für alle Punkte $(\overline{x}^0,\overline{y}^0)$, welche nicht auf, sondern zwischen den Gitterlinien liegen, können die Werte der Phasenfunktion durch geeignete Interpolation ermittelt werden. Ist umgekehrt die Phasenfunktion $\psi^0(\overline{x}^0,\overline{y}^0)$ bekannt, so können die Gitterlinien durch Berechnung der Kurven $\psi^0(\overline{x}^0,\overline{y}^0)$=const. mit $\psi^0(\overline{x}^0,\overline{y}^0)$=0, $\psi^0(\overline{x}^0,\overline{y}^0)$=1, $\psi^0(\overline{x}^0,\overline{y}^0)$=2, etc. ermittelt werden.

Diejenige Phasenfunktion, die für die lokale Strahldurchrechnung relevant ist, ist nach Festlegung eines lokalen Koordinatensystems $(\overline{x},\,\overline{y},\,\overline{z})$ die Funktion

$$\psi(\overline{x},\overline{y}) = \psi^0\big(\overline{x}^0(\overline{x},\overline{y}),\overline{y}^0(\overline{x},\overline{y})\big), \qquad (115)$$

(siehe Block 134 in Fig. 12), wobei sich die Zusammenhänge $\overline{x}^0(\overline{x},\,\overline{y})$, $\overline{y}^0(\overline{x},\overline{y})$ aus der Transformation vom globalen Koordinatensystem in das lokale Koordinatensystem (für den jeweiligen Durchstoßpunkt) ergeben. Durch die Festlegung (siehe Block 136 in Fig. 12)

$$\Psi(\overline{x},\overline{y};\lambda,m) = m\lambda \cdot \psi(\overline{x},\overline{y}) \qquad (116)$$

analog zu der Gleichung (114) kann schließlich die lokale Phasenfunktion unter Einbeziehung der Beugungsordnung und der Wellenlänge erhalten werden.

Nachdem das diffraktive Gitter nach einem beispielhaften, bevorzugten Verfahren zum Bestimmen eines diffraktiven Gitters bestimmt ist, kann das optische Element mit dem zuvor bestimmten diffraktiven Gitter gefertigt werden.

Das Fertigen des optischen Elements kann ein Auf- oder Anbringen des berechneten diffraktiven Gitters auf zumindest einer Grenzfläche eines vorgefertigten refraktiven optischen Elements bzw. Grundelements umfassen. Das vorgefertigte refraktive optische Element bzw. Grundelement kann z.B. ein Brillenglas oder ein Brillenglas-Halbfabrikat bzw. Blank sein. Es ist jedoch möglich, das berechnete diffraktive Gitter und das refraktive optische Element bzw. Grundelement in einem gemeinsamen Fertigungsschritt anhand der Daten des refraktiven optischen Elements bzw. Grundelements und des berechneten zumindest einen diffraktiven Gitters zu fertigen. Verfahren zum Herstellen bzw. Fertigen von refraktiven optischen Elementen mit statischen oder schaltbaren diffraktiven Gittern bzw. zum Auf- oder Anbringen von statischen oder schaltbaren diffraktiven Gittern auf refraktive optische Elemente, z.B. mittels lithographischer Verfahren, mittels CNC gesteuerter Maschinen, mittels Gießens, mittels Formation schaltbarer Strukturen, etc., sind aus dem Stand der Technik bekannt.

**Bezugszeichenliste**

| | |
|---|---|
| 10 | einfallende Wellenfront |
| 12 | Grenzfläche |
| 14 | periodische Struktur (diffraktives Gitter) |
| 16 | ausfallende Wellenfront |
| 20 | Prisma |
| 22 | Vektorfeld des Prismas |
| 24 | Gitterlinien/Isolinien der Glasdicke |
| 102 | einfallender Strahl; |
| 104,106 | refraktive Grenzflächen |
| 108 | ausfallender Strahl |
| 108-m | ausfallender Strahl der m-ten Beugungsordnung |
| 110 | einfallende Wellenfront |
| 112 | ausfallende Wellenfront |
| 122 | diffraktives Gitter |

| 114 | optisches Material |
| 116 | Durchgang durch das optische Material |
| 122a | Gitterlinien |
| 112b | projizierte Gitterlinien |
| 124 | Einfallsebene |
| 126 | orthogonale Trajektorien |
| 130-134 | Schritte des Übergangs zwischen einer Periodenfunktion und einer Phasenfunktion |

**Patentansprüche**

1. Computerimplementiertes Verfahren zum Bestimmen eines diffraktiven Gitters (14, 122) zur Farbsaumkompensation eines nicht rotationssymmetrischen Brillenglases, umfassend
Erfassen von Daten des Brillenglases; und
Ermitteln der Linien konstanter Dicke (24) des Brillenglases und Berechnen des diffraktiven Gitters (14, 122) mit nicht rotationssymmetrischen Gitterlinien anhand der erfassten Daten des Brillenglases derart, dass die Gitterlinien (122a) des diffraktiven Gitters (14, 122) parallel zu den Linien konstanter Dicke (24) des Brillenglases sind, wobei die Dicke des Brillenglases die Dicke ist, welche entlang der schiefen Dicke in einer vorgegebene Gebrauchsstellung des Brillenglases gemessen wird, und
wobei die schiefe Dicke, die Dicke ist, welche sich beim Lichtdurchgang durch das Brillenglas im Strahlengang der Gebrauchsstellung des Brillenglases ergibt.

2. Verfahren nach einem der vorangegangenen Ansprüche, wobei das Brillenglas ein progressives oder atorisches Brillenglas ist.

3. Computerprogrammerzeugnis, welches ausgelegt ist, wenn geladen und ausgeführt auf einem Computer, ein Verfahren zum Bestimmen eines diffraktiven Gitters (14, 122) für ein nicht rotationssymmetrisches Brillenglas gemäß einem der Ansprüche 1 oder 2 durchzuführen.

4. Speichermedium mit darauf gespeichertem Computerprogramm, wobei das Computerprogramm ausgelegt ist, wenn geladen und ausgeführt auf einem Computer, ein Verfahren zum Bestimmen eines diffraktiven Gitters (14, 122) für ein nicht rotationssymmetrisches Brillenglas gemäß einem der Ansprüche 1 oder 2 durchzuführen.

5. Verfahren zum Herstellen eines nicht rotationssymmetrischen Brillenglases mit zumindest einem diffraktiven Gitter (14, 122) umfassend:

   Bestimmen zumindest eines diffraktiven Gitters (14, 122) nach dem Verfahren gemäß einem der Ansprüche 1 oder 2;
   Fertigen des Brillenglases mit dem zuvor bestimmten diffraktiven Gitter (14, 122).

6. Vorrichtung zum Herstellen eines nicht rotationssymmetrischen Brillenglases mit zumindest einem diffraktiven Gitter (14, 122) umfassend:

   Gitterbestimmungsmittel, welche ausgelegt sind, ein diffraktives Gitter (14, 122) nach dem Verfahren gemäß einem der Ansprüche 1 oder 2 zu bestimmen;
   Bearbeitungsmittel, welche ausgelegt sind, das Brillenglas mit dem zuvor bestimmten diffraktiven Gitter (14, 122) zu fertigen.

**Claims**

1. A computer-implemented method for determining a diffractive grating (14, 122) for color space compensation of a non rotationally symmetrical spectacle lens, comprising
Acquiring data of the spectacle lens; and
Determining the lines of constant thickness (24) of the spectacle lens and calculating the diffractive grating (14, 122) with non rotationally symmetrical grid lines from the acquired data of the spectacle lens such that the grid lines (122a) of the diffractive grating (14, 122) are parallel to the lines of constant thickness (24) of the spectacle lens, wherein the thickness of the spectacle lens is the thickness which is measured along the oblique thickness in a predetermined position of use of the spectacle lens, and
wherein the oblique thickness is the thickness, which results from the light passage through the spectacle lens in the beam path of the use position of the spectacle lens.

2. The method according to any one of the preceding claims, wherein the spectacle lens is a progressive or atoric spectacle lens.

3. A computer program product adapted to perform, when loaded and executed on a computer, a method of determining a diffractive grating (14, 122) for a non rotationally symmetrical spectacle lens according to one of claims 1 or 2.

4. A storage medium with a computer program stored thereon, wherein the computer program is designed, when loaded and executed on a computer, to perform a method for determining a diffractive grating (14, 122) for a non rotationally symmetrical spectacle lens according to one of claims 1 or 2.

5. A method for producing a non rotationally symmetrical spectacle lens having at least one diffractive grating (14, 122) comprising:

Determining at least one diffractive grating (14, 122) according to the method of one of claims 1 or 2;
Manufacturing the spectacle lens with the previously determined diffractive grating (14, 122).

6. Apparatus for producing a non rotationally symmetrical spectacle lens comprising at least one diffractive grating (14, 122) comprising
Grid determining means adapted to determine a diffractive grating (14, 122) according to the method of any one of claims 1 or 2;
Processing means which are designed to manufacture the spectacle lens with the previously determined diffractive grating (14, 122).

## Revendications

1. Procédé mis en oeuvre par ordinateur pour déterminer un réseau diffractif (14, 122) pour la compensation d'espace de couleur d'un verre de lunettes non-rotosymétrique, comprenant:

Acquisition des données du verre de lunettes; et
Détermination des lignes d'épaisseur constante (24) du verre de lunettes et calcul du réseau de diffraction (14, 122) avec des lignes de grille non-rotosymétrique à partir des données détectées du verre de lunettes de sorte que les lignes de grille (122a) du réseau de diffraction (14, 122) soient parallèles aux lignes d'épaisseur constante (24) du verre de lunettes,
dans laquelle l'épaisseur du verre de lunettes est l'épaisseur qui est mesurée le long de l'épaisseur oblique dans une position d'utilisation prédéterminée du verre de lunettes, et
dans lequel l'épaisseur oblique est l'épaisseur, qui entraîne le passage de la lumière à travers le verre de lunettes dans le trajet de faisceau de la position d'utilisation du verre de lunettes.

2. Procédé selon l'une quelconque des revendications précédentes, dans lequel le verre de lunettes est un verre de lunettes progressif ou atorique.

3. Produit de programme informatique adapté pour exécuter, lorsqu'il est chargé et exécuté sur un ordinateur, un procédé pour déterminer un réseau diffractif (14, 122) pour un verre de lunettes non-rotosymétrique selon l'une des revendications 1 ou 2.

4. Support de stockage avec un programme d'ordinateur stocké sur celui-ci, dans lequel le programme d'ordinateur est conçu, lorsqu'il est chargé et exécuté sur un ordinateur, pour exécuter un procédé pour déterminer un réseau diffractif (14, 122) pour un verre de lunettes non-rotosymétrique selon l'une des revendications 1 ou 2.

5. Procédé de fabrication d'un verre de lunettes non-rotosymétrique comportant au moins un réseau diffractif (14, 122) comprenant:

Détermination d'au moins un réseau diffractif (14, 122) selon le procédé de l'une des revendications 1 ou 2;

Finition du verre de lunettes avec le réseau de diffraction précédemment déterminé (14, 122).

6. Appareil pour la production d'un verre de lunettes non-rotosymétrique comprenant au moins un réseau diffractif (14, 122) comprenant

Un moyen de détermination de grille adapté pour déterminer un réseau diffractif (14, 122) selon le procédé de l'une quelconque des revendications 1 ou 2;

Des moyens de traitement conçus pour fabriquer le verre de lunettes avec le réseau de diffraction précédemment déterminé (14, 122).

**Fig. 1**

**Fig. 2**

**Fig. 3**

**Fig. 5**

**Fig. 4A**        **Fig. 4B**        **Fig. 4C**

EP 2 641 125 B1

Fig. 6A

Fig. 6B

Fig. 7

EP 2 641 125 B1

102 — einfallender Strahl

Einfallsebene — 124

120

brechende Fläche

$n$

$\varphi$

diffraktives Gitter

122

$d$

108-m

ausfallende Strahlen

$\varphi$

$m = +1$

$m = -1$

$m = 0$

$n'$

**Fig. 8**

$\bar{z}$

$-\varphi$

$z$

$\varphi_y$ $\varphi_x$

$-\varphi$

$-\chi$

$\bar{x}$

$\chi$

$x$

$-\chi$

$-\varphi$

$y$

$\chi$

$\bar{y}$

**Fig. 8A**

122

$$\mathbf{d} = \begin{pmatrix} d_x \\ d_y \end{pmatrix}$$

**Fig. 9**

122

Orthogonale Trajektorien 126

Gitterlinien
122a

$$\mathbf{d}(\bar{x}^0, \bar{y}^0)$$

**Fig. 10**

Fig. 11

EP 2 641 125 B1

130

132

Vermessung der Gitterprojektion (z.B. Mikroskopaufnahme):
- Gitterlinien
- Funktion $\mathbf{d}(\bar{x}^0,\bar{y}^0)$

Interpolation

Phasenfunktion $\psi^0(\bar{x}^0,\bar{y}^0)$

Kurven mit $\psi^0(\bar{x}^0,\bar{y}^0) = const.$

Festlegung $m,\lambda$

Phasenfunktion $\Psi^0(\bar{x}^0,\bar{y}^0;\lambda,m)$

Abspalten $m,\lambda$

Festlegung Durchstoß-punkt:

Trsf. in d. globale System

Trsf. in das lokale System

Trsf. in d. globale System

Trsf. in das lokale System

Phasenfunktion $\psi(\bar{x},\bar{y})$

Festlegung $m,\lambda$

Abspalten $m,\lambda$

Phasenfunktion $\Psi(\bar{x},\bar{y};\lambda,m)$

134

136

**Fig. 12**

## IN DER BESCHREIBUNG AUFGEFÜHRTE DOKUMENTE

### In der Beschreibung aufgeführte Patentdokumente

- DE 4110614 A1
- DE 10234216
- US 6070980 A
- WO 2008089999 A1

### In der Beschreibung aufgeführte Nicht-Patentliteratur

- **G. ESSER ; W. BECKEN ; W. MÜLLER ; P. BAUMBACH ; J. ARASA ; D. UTTENWEILER.** Derivation of the refraction equations for higher-order aberrations of local wavefronts at oblique incidence. *JOSA. A,* 02. Februar 2010, vol. 27, 218-237